# FASCICULE DE BREVET EUROPEEN

(11) **EP 3 448 809 B1**
(45) Date de publication et mention de la délivrance du brevet: **17.03.2021**
(21) Numéro de dépôt: 17725310.1
(22) Date de dépôt: 25.04.2017
(51) Int. Cl.: C01B 32/164, B01J 4/00

(54) **INSTALLATION POUR LA FABRICATION D'UN MATÉRIAU COMPOSITE COMPRENANT DES NANOTUBES DE CARBONE ET PROCÉDÉ DE MISE EN OEUVRE DE CETTE INSTALLATION**
ANLAGE ZUR HERSTELLUNG EINES VERBUNDMATERIALS MIT KOHLENSTOFFNANORÖHRCHEN UND VERFAHREN ZUR DURCHFÜHRUNG DIESER ANLAGE
FACILITY FOR PRODUCING A COMPOSITE MATERIAL COMPRISING CARBON NANOTUBES AND METHOD FOR IMPLEMENTING SAID FACILITY

(30) Priorité: 25.04.2016 FR 1653606
(43) Date de publication de la demande: 06.03.2019
(73) Titulaire: Nawatechnologies, 13100 Aix-En-Provence (FR)
(72) Inventeur: DESCARPENTRIES, Jérémie, 91190 Gif Sur Yvette (FR)
(74) Mandataire: Schmidt, Martin Peter
(86) Numéro de dépôt international: PCT/FR2017/050976
(87) Numéro de publication internationale: WO 2017/187080

(56) Documents cités:
- EP-A1- 2 397 441
- WO-A1-2013/059506
- US-A1- 2011 318 256
- US-A1- 2013 189 432
- US-B1- 7 160 531
- YASUDA S ET AL: "Improved and large area single-walled carbon nanotube forest growth by controlling the gas flow direction", ACS NANO, AMERICAN CHEMICAL SOCIETY USA, vol. 3, no. 12, 22 décembre 2009 (2009-12-22), pages 4164-4170, XP002765859, DOI: 10.1021/NN9007302

## Description

### Domaine technique de l'invention

L'invention concerne le domaine des réacteurs pour le dépôt de nanotubes de carbone à partir d'une phase vapeur sur un substrat solide. Plus particulièrement, elle concerne une installation pour la fabrication d'un matériau composite comprenant des nanotubes de carbone, notamment des nanotubes de carbone verticalement alignés (VACNT), déposées sur un substrat typiquement en défilement. L'invention concerne également un procédé de mise en oeuvre de cette installation.

### Etat de la technique

Les nanotubes de carbone (abrégés souvent « CNT », Carbon NanoTubes) ont des parois formées par des mono-feuilles graphitiques (feuilles de graphène). Qu'ils soient à paroi mono-feuillet ou à paroi multi-feuillets, ils présentent des propriétés mécaniques, thermiques, électroniques et structurelles particulières ; ces propriétés reflètent leur forte anisotropie structurelle. On a imaginé de nombreuses applications tirant profit de ces propriétés particulières. On a ainsi préparé des matériaux polymères chargés de nanotubes, qui ont été utilisés pour la fabrication de raquettes de tennis, tirant profit de propriétés mécaniques alliant résistance et flexibilité. On a également envisagé de tirer profit de leur haute conductivité électronique dans le sens de la longueur des tubes.

Depuis une dizaine d'années on sait déposer des CNT verticalement alignés sur un substrat ; ce produit est connu sous le signe VACNT (Vertically Aligned Carbon NanoTubes). Hu et al. (« 3-omega measurements of vertically oriented carbon nanotubes on silicon », J. Heat Transf. 128 (2006) p.1109-1113) décrivent la possibilité d'utiliser un tapis de VACNT comme matériaux d'interface thermique (TIM - Thermal Interface Materials). Les matériaux d'interface thermique servent à évacuer la chaleur produite par des composants électroniques avec lesquels ils sont en contact thermique. Les auteurs observent sur un tapis de VACNT déposé sur un cristal de silicium que la conductivité thermique dans le sens de l'épaisseur (i.e. parallèle à la longueur des tubes alignés) est beaucoup plus élevée que celle des matériaux d'interface thermique commercialement disponibles.

On connait, par FR 3 013 061 A1, un procédé de fabrication en continu de nanostructures alignées sur un support défilant, comprenant le convoyage du support à travers un espace chauffé et la synthèse, dans cet espace, des nanostructures alignées sur le support par dépôt chimique catalytique en phase vapeur. Selon ce procédé, l'espace chauffé est divisé en au moins deux zones consécutives dans le sens de convoyage du support. La synthèse des nanostructures résulte d'opérations de chauffage et d'opérations d'injection, dans chacune des zones précitées, d'un flux d'un aérosol contenant un précurseur catalytique et un précurseur source du matériau des nanostructures à former, véhiculé par un gaz porteur.

Les opérations d'injection sont réalisées en modifiant, dans au moins deux desdites zones, un paramètre choisi parmi le débit du flux du gaz porteur et la composition chimique du gaz porteur. En procédant ainsi, on obtient des conditions de synthèse des nanostructures différentes dans au moins deux de ces zones. Le gaz porteur peut être un gaz inerte ou un gaz réactif ou un mélange gaz inerte/gaz réactif; l'aérosol, quant à lui, correspond à la dispersion, sous forme de gouttelettes, du liquide ou de la solution contenant le précurseur catalytique et/ou le précurseur source dans le gaz porteur, cette dispersion étant obtenue par pulvérisation ou par nébulisation du liquide ou de la solution dans le gaz porteur.

Cette solution connue présente cependant certaines limites. En effet, quand bien même FR 3 013 061 A1 apporte des précisions substantielles sur le procédé de fabrication, il se contente de décrire l'installation correspondante de manière schématique. A la lecture de ce document, il n'est donc pas possible de retirer un enseignement significatif, au plan constructif. En particulier, ce document ne contient pas d'enseignement concernant les moyens de confinement de l'atmosphère à l'intérieur du réacteur et les moyens d'injection de gaz, un enseignement qui serait utile pour pouvoir réaliser un réacteur d'une taille industrielle.

On connaît en outre, de US 2011/318256, une installation de synthèse en continu de nanotubes de carbone, qui comprend une zone de revêtement et de séchage, une zone de synthèse, ainsi qu'une zone de collecte. Au sein de la zone de synthèse, le mélange gazeux est injecté par des tubes, selon une direction perpendiculaire au défilement du substrat. Des conduites d'extraction de gaz sont en outre prévues de part et d'autre de la zone de synthèse, de manière à évacuer le gaz également selon une direction perpendiculaire au défilement du substrat. Cette installation connue présente cependant certains inconvénients, liés notamment à son manque de modularité.

Par ailleurs, EP 2 397 441 et US 2013/189432 décrivent différents modes de réalisation d'appareils destinés à la production de nanotubes de carbone. Ces appareils comprennent notamment des sections d'injection de gaz, faisant intervenir des organes d'injection du type pommeau de douche, ou encore du type plaques perforées.

Compte tenu de ce qui précède, un objectif de la présente invention est donc de remédier, au moins partiellement, aux inconvénients de l'art antérieur évoqués ci-dessus.

Un autre objectif de l'invention est de proposer une installation permettant de mettre en oeuvre, de façon à la fois simple et efficace, un procédé de fabrication d'un matériau composite comprenant des nanotubes de carbone.

Un autre objectif de l'invention est de proposer une telle installation qui s'accompagne d'une mise en oeuvre flexible, de façon à faire varier de façon commode les paramètres du procédé.

Un autre objectif de l'invention est de proposer une telle installation, qui présente une structure modulable, tout en restant d'une simplicité satisfaisante.

### Objet de l'invention

Selon l'invention, les objectifs ci-dessus sont atteints au moyen d'une installation pour la fabrication d'un matériau composite comprenant des nanotubes de carbone, cette installation comportant
- au moins une chambre de traitement, ou chambre réactionnelle, comprenant des moyens d'injection d'un mélange gazeux actif dans le volume intérieur de cette chambre, ce mélange gazeux étant destiné à la croissance des nanotubes de carbone,
- des moyens de transport d'un substrat destiné à former ledit matériau composite, sous forme de feuille ou de bande, dans la chambre,
caractérisée en ce que
les moyens d'injection sont aptes à transporter le mélange actif selon une première direction dans ledit volume intérieur,
et en ce que l'installation comprend en outre des moyens de mise en circulation du mélange gazeux, aptes à transporter le mélange actif dans ledit volume intérieur selon une deuxième direction, différente de ladite première direction,
les moyens de mise en circulation pouvant adopter une première configuration d'injection du mélange gazeux actif dans le volume intérieur de cette chambre, ainsi qu'une deuxième configuration d'extraction du mélange gazeux actif hors dudit volume intérieur.

Selon d'autres caractéristiques de l'installation conforme à l'invention, prises isolément ou selon toute combinaison techniquement compatible :
- ladite première direction est sensiblement perpendiculaire à la direction de défilement du substrat dans la chambre, alors que ladite deuxième direction est sensiblement parallèle à la direction de défilement du substrat ;
- les moyens de mise en circulation comprennent au moins deux dispositifs de mise en circulation, respectivement amont et aval prévus de part et d'autre des moyens d'injection, en référence au sens de défilement du substrat ;
- chaque dispositif de mise en circulation est équipé de moyens de connexion propres à être raccordés sélectivement, soit à une source de mélange gazeux, soit à une source de dépression ;
- les deux dispositifs de mise en circulation ont des structures identiques et sont agencés de manière symétrique par rapport à un plan transversal de la chambre ;
- chaque dispositif de mise en circulation comprend un corps délimitant un volume intérieur ainsi que des orifices possédant un débouché, hors dudit volume intérieur, qui s'étend selon ladite deuxième direction ;
- les moyens d'injection comprennent au moins un module d'injection, chaque module d'injection comprenant une plaque perforée de distribution de mélange gazeux, ainsi qu'un capot délimitant un volume d'homogénéisation dudit mélange ;
- chaque module d'injection comprend un organe de répartition en forme de parasol inversé, propre à répartir le gaz dans le volume intérieur dudit module ;
- les moyens d'injection comprennent au moins deux modules d'injection disposés les uns derrière les autres, en référence à la direction de défilement du substrat ;
- les modules d'injection comprennent des moyens de fixation amovible les uns par rapport aux autres ;
- cette installation comprend en outre au moins deux unités de fourniture d'un gaz barrière, prévues de part et d'autre des moyens d'injection, en référence à la direction de défilement du substrat ;
- chaque unité de fourniture d'un gaz barrière comprend au moins une ligne de fentes de fourniture, ladite ligne étant inclinée en direction de l'extérieur de la chambre, en vue de côté ;
- les moyens d'injection, les moyens de mise en circulation et, éventuellement, les unités de fourniture d'un gaz barrière sont logés dans une enceinte, ladite enceinte comprenant en outre des moyens de chauffage ;
- ladite enceinte comprend un support fixe de réception du substrat, ce support délimitant une zone inférieure de réception des moyens de chauffage, ainsi qu'une zone supérieure dans laquelle est placée la chambre de traitement ;
- ladite enceinte est réalisée sous forme d'un caisson muni d'une trappe permettant l'accès à l'intérieur de ce caisson, les moyens d'injection, les moyens de mise en circulation et, éventuellement, les unités de fourniture d'un gaz barrière étant fixés, notamment de façon amovible, sur ladite trappe dudit caisson ;
- cette installation comprend en outre au moins deux ensembles d'aspiration de gaz, prévus de part et d'autre des moyens d'injection, en référence à la direction de défilement du substrat.
- ledit ensemble d'aspiration de gaz comprend deux conduites d'extraction, dans lesquelles le gaz s'écoule transversalement par rapport à la direction de défilement du substrat, et cet ensemble d'aspiration est équipé de deux déflecteurs, s'étendant sensiblement parallèlement à la direction de défilement du substrat, chaque déflecteur étant placé en regard d'au moins une partie du débouché d'une conduite d'extraction respective.
- cette installation comprend en outre un organe complémentaire d'injection de gaz, intercalé entre l'ensemble d'aspiration de gaz amont et l'entrée de la chambre réactionnelle.
- ledit organe complémentaire d'injection de gaz comprend deux séries d'orifices d'injection, dans lesquelles le gaz s'écoule transversalement par rapport à la direction de défilement du substrat, et cet organe complémentaire d'injection est équipé de deux déflecteurs, s'étendant sensiblement parallèlement à la direction de défilement du substrat, chaque déflecteur étant placé en regard d'au moins une partie du débouché d'une série respective d'orifices d'injection.

Les objectifs ci-dessus sont également atteints au moyen d'un procédé de mise en oeuvre de l'installation telle que ci-dessus, dans lequel
- on active les moyens d'injection, de manière à admettre du mélange gazeux actif dans le volume intérieur de la chambre, selon la première direction ;
- on active les moyens de mise en circulation, de manière à transporter ce mélange gazeux actif le long de cette chambre, selon la deuxième direction ;
- on fait défiler le substrat dans ladite chambre, de manière à former des nanotubes de carbone à la surface de ce substrat.

Selon d'autres caractéristiques du procédé conforme à l'invention, prises isolément ou selon toute combinaison techniquement compatible :
- on transporte le mélange gazeux actif selon une direction parallèle à la direction de défilement du substrat ;
- on admet une première fraction de mélange gazeux actif par les moyens d'injection et on admet une deuxième fraction du mélange gazeux actif par les moyens de mise en circulation ;
- on admet la deuxième fraction du mélange gazeux actif en amont de la chambre réactionnelle, de sorte que le mélange gazeux actif est transporté dans le même sens que le sens de défilement du substrat ;
- on admet la deuxième fraction du mélange gazeux actif en aval de la chambre réactionnelle, de sorte que le mélange gazeux actif est transporté dans le sens opposé au sens de défilement du substrat ;
- on admet la totalité du mélange gazeux actif par les moyens d'injection et on active les deux dispositifs de mise en circulation, respectivement amont et aval, de sorte qu'une partie du mélange gazeux actif est transportée dans le même sens que le sens de défilement du substrat, alors qu'une autre partie du mélange gazeux est transportée dans le sens opposé au sens de défilement du substrat ;
- ledit mélange gazeux actif comprend un catalyseur organo-métallique et un gaz source de carbone ;
- la pression dans ladite chambre de traitement est comprise entre 0,6 bar et 1,4 bar, préférentiellement entre 0,8 bar et 1,2 bar, et encore plus préférentiellement entre 0,9 bar et 1,1 bar ;
- on place la chambre réactionnelle en sous pression par rapport au reste de l'enceinte, la différence entre la pression du reste de l'enceinte et la pression de la chambre réactionnelle étant comprise entre 1 et 20 Pa, notamment entre 2 et 10 Pa, en particulier voisine de 5 Pa.

### Description des figures

L'invention va être décrite ci-après, en référence aux dessins annexés, donnés uniquement à titre d'exemples non limitatifs, dans lesquels:
La figure 1 est une vue de face illustrant une installation conforme à un mode de réalisation de l'invention.
La figure 2 est une vue de face illustrant, à plus grande échelle, une enceinte principale appartenant à l'installation conforme à l'invention.
La figure 3 est une vue de face illustrant, à encore plus grande échelle, une chambre réactionnelle appartenant à l'enceinte de la figure 2.
La figure 4 est une vue de dessus illustrant un module d'injection de gaz réactifs appartenant à la chambre réactionnelle de la figure 3.
La figure 5 est une vue de dessus, illustrant une plaque d'injection appartenant au module de la figure 4.
La figure 6 est une vue en coupe longitudinale, illustrant un dispositif de mise en circulation de gaz réactifs, appartenant à l'enceinte de la figure 2.
La figure 7 est une vue en coupe longitudinale, illustrant une unité de distribution de gaz barrière, appartenant à l'enceinte de la figure 2.
La figure 8 est une vue de dessous, illustrant l'unité de distribution de gaz barrière de la figure 7.
La figure 9 est une vue en coupe longitudinale illustrant une unité d'aspiration appartenant à l'installation conforme à l'invention.
La figure 10 est une vue en coupe, selon la ligne X-X de la figure 9, illustrant l'unité d'aspiration de la figure 9.
La figure 11 est une vue en bout, illustrant un mode de réalisation constructif de l'enceinte de la figure 2.
Les figures 12 à 14 sont des vues de face analogues à la figure 3, illustrant trois modes de mise en oeuvre de la chambre réactionnelle de cette figure 3.
Les figures 15 et 16 sont des vues en coupe longitudinale, selon les lignes de coupe XV-XV et XVI-XVI à la figure 4, illustrant le module d'injection représenté sur cette figure 3.
La figure 17 est une vue en perspective, illustrant plus particulièrement la paroi avant de la chambre réactionnelle de la figure 3, l'unité d'aspiration de la figure 9, ainsi qu'un organe complémentaire d'injection, interposé entre cette chambre réactionnelle et cette unité d'aspiration.
La figure 18 est une vue en perspective, montrant à plus grande échelle l'organe complémentaire illustré en figure 17.
La figure 19 est une vue en coupe longitudinale analogue à la figure 9, illustrant une variante de réalisation de l'unité d'aspiration montrée sur cette figure 9.
La figure 20 est une vue en coupe longitudinale, illustrant une variante de réalisation de l'organe complémentaire montré sur les figures 17 et 18.
Les figures 21 et 22 sont des photographies montrant, à deux grossissements différents, un échantillon obtenu par une première synthèse conforme l'invention, à l'issue de la croissance de nanotubes de carbone verticalement alignés sur un alliage d'aluminium.
Les figures 23 et 24 sont des photographies montrant une deuxième synthèse conforme à l'invention, respectivement de nanotubes de carbone sur un substrat aluminium en mode roll to roll en sortie de l'installation de synthèse, ainsi que de nanotubes de carbone verticalement alignés sur un substrat aluminium enroulés sur un rouleau de sortie.
Les figures 25 et 26 sont des photographies, analogues aux figures 21 et 22, montrant à deux grossissements différents un échantillon obtenu par la deuxième synthèse conforme l'invention.

Les références numériques suivantes sont utilisées dans la présente description:

| | | | |
|---|---|---|---|
| XX | Axe longitudinal | YY | Axe latéral |
| ZZ | Axe vertical | | |
| 1 | Enceinte principale | L1 | Longueur de 1 |
| I1 | Largeur de 1 | H1 | Hauteur de 1 |
| 11 | Paroi avant | 15 | Fond |
| 16 | Parois latérales | 17 | Paroi supérieure |
| 2 | Zone inférieure de 1 | H2 | Hauteur de 2 |
| 21 | Paroi avant de 2 | 22 | Paroi arrière de 2 |
| 25 | Paroi de fond de 2 | 26 | Module de chauffage |
| 26' | Elément chauffant | 26" | Plaques isolantes |
| 3 | Zone supérieure de 1 | 31 | Paroi avant de 3 |
| 32 | Paroi arrière de 3 | 35 | Paroi de toit |
| 36 | Plaques | E1 | Entrée de 1 |
| S1 | Sortie de 1 | 37 | Région de préchauffage |
| 38 | Rouleau tendeur | 10 | Sole |
| 4 | Chambre réactionnelle | | |
| 5,5',5" | Module d'injection de gaz réactionnel | 50 | Plaque de base |
| L5 | Longueur de 5 | L5 | Largeur de 5 |
| 52 | Orifice | 53 | Orifice transversal |
| 53',53" | Embouts | 60 | Corps creux |
| 61 | Col de 60 | 61' | Canal d'admission |
| 62 | Passages | 63 | Organes de diffusion |
| 64 | Tube de 63 | 64' | Orifices de 64 |
| 65 | Eléments de diffusion | 66 | Enceinte principale |
| R | Trajet gaz réactifs | | |
| 7,7' | Dispositif de mise en circulation | 70 | Corps de 7 |
| V70 | Volume intérieur de 70 | 71 | Parois périphériques |
| 72 | Paroi supérieure | 73 | Paroi de fond |
| 75 | Orifice | 751,752 | Tronçons de 75 |
| 75' | Tubes latéraux | 76 | Cols |
| 77,78 | Déflecteurs | R' | Trajet gaz réactifs |
| 8,8' | Unité de distribution de gaz barrière | 80 | Corps de 8 |
| V80 | Volume intérieur de 80 | 81 | Parois périphériques |
| 82 | Paroi supérieure | 83 | Paroi de fond |
| 85 | Fentes | L85 | Lignes de fentes 85 |
| 86 | Cols | N | Trajet gaz neutre |
| 9,9' | Ensemble d'aspiration | 90 | Boîte de transition |
| 91 | Couloir d'arrivée | 92 | Conduites d'extraction |
| 93 | Couloir de jonction | 94 | Déflecteurs |
| 95 | Plaque d'injection | 96 | Fente de 95 |
| 97,98 | Orifices | 97',98' | Débouchés de 97, 98 |
| 99 | Déflecteurs | | |
| 100 | Source gaz réactifs | 200 | Source de dépression |
| 300 | Source de gaz barrière | C5,C7,C8 | Connexions |
| AIR | Trajet d'air | I1,I2 | Gaz d'inertage |
| B | Trajet de gaz barrière | F,G | Trajets de gaz |

### Description détaillée

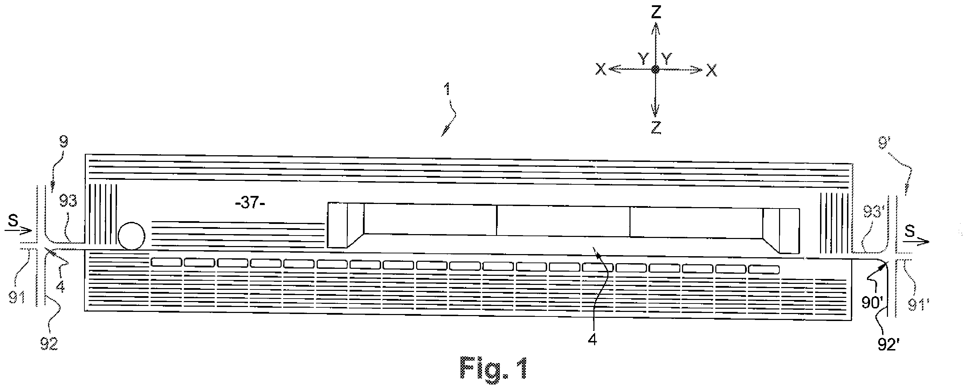

Les figures annexées décrivent un mode de réalisation d'une installation conforme à l'invention. Sur la figure 1 on a porté trois axes, à savoir un axe XX longitudinal de l'installation, un axe YY dit latéral ou transversal, ainsi qu'un axe ZZ vertical.

Cette installation comprend essentiellement une enceinte principale, désignée dans son ensemble par la référence **1,** un ensemble d'aspiration amont **9** et un ensemble d'aspiration aval **9'.** L'enceinte principale **1,** de forme parallélépipédique, présente typiquement les dimensions suivantes :
- longueur *L1* entre 150 centimètres (cm) et 450 cm,
- largeur *I1* entre 15 cm et 100 cm,
- hauteur *H1* entre 20 cm et 150 cm.

Ces valeurs sont données à titre indicatif, pour un substrat dont la largeur est voisine de 100 cm. L'homme du métier pourra adapter ces dimensions, en fonction notamment de la largeur de ce substrat.

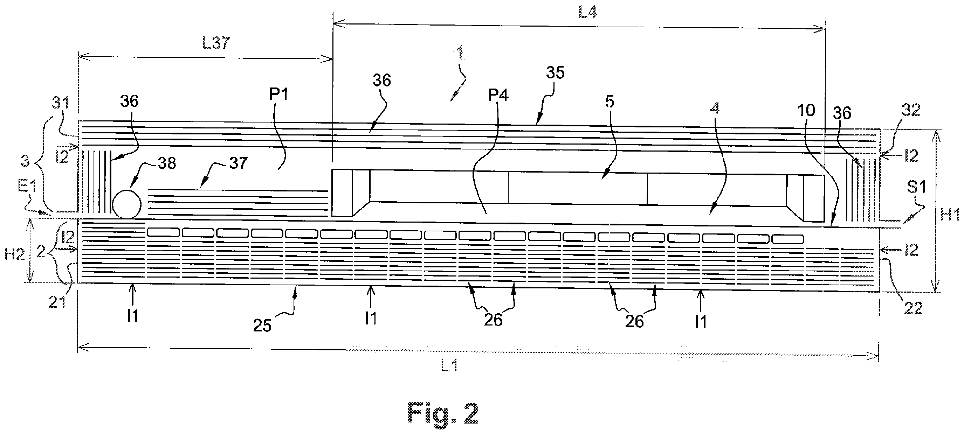

L'enceinte **1** comporte deux zones principales, respectivement inférieure **2** et supérieure **3** (voir notamment figure 2), lesquelles sont séparées par une sole horizontale **10** qui va être décrite plus en détail dans ce qui suit. Dans le présent mode de réalisation, ces zones **2** et **3** sont séparées physiquement par un organe mécanique fixe, à savoir la sole précitée. On notera cependant que, dans d'autres modes de réalisation non représentés de l'invention, un tel organe fixe n'est pas prévu, de sorte que ces deux zones sont délimitées par le substrat proprement dit.

La zone inférieure **2** s'étend sur une hauteur *H2* qui est typiquement comprise entre 10 % et 50 % de la hauteur totale *H1* définie ci-dessus. Elle est bordée par différentes parois, à savoir des parois opposées avant **21** et arrière **22,** des parois latérales opposées, ainsi qu'une paroi de fond **25.** La sole **10** est typiquement formée par une tôle métallique, dont l'épaisseur est par exemple comprise entre 3 mm et 20 mm, dont le matériau est adapté à la température de procédé. Elle peut être posée sur un cadre pour favoriser sa dilatation thermique. On peut utiliser aussi une plaque en graphite. La sole est immobile par rapport aux parois de l'enceinte.

Les parois précitées de la zone inférieure **2** délimitent, avec la sole **10,** un volume de réception pour des modules de chauffage **26,** de type connu en soi. Ces modules **26** sont disposés les uns derrière les autres, selon l'axe X-X. De façon avantageuse, chaque module peut être remplacé indépendamment des autres, ce qui assure une maintenance commode.

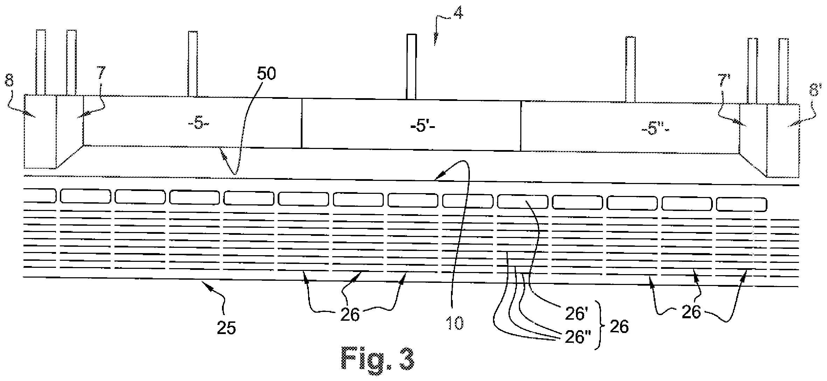

Comme le montre plus particulièrement la figure 3, chaque module **26** comprend un élément chauffant supérieur **26',** disposé immédiatement au-dessous de la sole **10,** ainsi qu'un empilement inférieur de plaques isolantes **26".** Dans un premier mode de réalisation, ces éléments chauffants **26'** sont des éléments céramiques. A titre de variante, ils peuvent permettre un chauffage par rayonnement ; il peut s'agir par exemple d'émetteurs infrarouge.

La zone supérieure **3** est bordée par différentes parois, à savoir des parois opposées avant **31** et arrière **32,** des parois latérales opposées, ainsi qu'une paroi de toit **35.** Sur leur face intérieure, ce parois sont recouvertes au moyen d'empilements de plaques **36,** ayant une fonction d'isolation thermique. Les parois avant en regard **21** et **31** délimitent une entrée **E1** de l'enceinte, alors que parois arrière en regard **22** et **32** délimitent une sortie **S1** de cette enceinte. Cette entrée et cette sortie, qui présentent une hauteur par exemple comprise entre 0.2 cm et 1.0 cm, s'étendent sur une largeur par exemple comprise entre 10 et 150 cm.

La zone supérieure de l'enceinte **1** définit successivement une région amont de préchauffage **37,** ainsi qu'une chambre réactionnelle **4,** encore dénommée chambre de traitement, qui sera décrite plus en détail dans ce qui suit. A titre d'exemple, la longueur *L37* de cette région de préchauffage **37** est comprise entre 20 et 100 cm, alors que la longueur *L4* de cette chambre réactionnelle **4** est comprise entre 70 et 230 cm. On notera donc que les figures 1 et 2 ne sont pas à l'échelle, afin d'illustrer plus clairement la chambre de réaction **4.** La région de préchauffage **37** est équipée notamment d'un rouleau tendeur **38,** de type connu en soi.

En aval de cette région de préchauffage **37,** la zone supérieure **3** délimite une chambre réactionnelle, désignée dans son ensemble par la référence **4.** Cette chambre comprend essentiellement (voir figure 3) :
- des modules d'injection de gaz réactifs **5, 5'** et **5",** disposés les uns derrière les autres selon la direction de défilement du substrat ;
- deux dispositifs **7** et **7',** dont chacun peut avantageusement être utilisé, soit en mode injection, soit en mode extraction, comme cela ressortira plus clairement de la suite de la description. Par conséquent ces dispositifs, qui sont prévus respectivement immédiatement en amont et immédiatement en aval des modules des modules précités **5** à **5",** sont dénommés dispositifs de mise en circulation de gaz réactifs ;
- deux unités **8** et **8'** de distribution d'un gaz barrière, prévues de part et d'autre des dispositifs **7** et **7'.**

L'installation selon l'invention, pour la fabrication d'un matériau composite comprenant des nanotubes de carbone, est conçue pour fonctionner à une pression dans la chambre réactionnelle **4** qui est typiquement proche de la pression atmosphérique. Plus précisément, elle est avantageusement comprise entre 0,6 bar et 1,4 bar, plus avantageusement entre 0,7 bar et 1,3 bar, plus préférentiellement entre 0,8 bar et 1,2 bar, encore plus préférentiellement entre 0,9 bar et 1,1 bar, et de manière optimale entre 0,95 bar et 1 bar.

Une gamme comprise entre 0,9 bar et 1,1 bar, notamment entre 0,95 bar et 1 bar, permet entre autres de ne pas exercer des contraintes mécaniques trop importantes sur les différents constituants de l'installation. Cette dernière peut, par conséquent, présenter un poids raisonnable.

Selon une variante avantageuse, on place la chambre réactionnelle **4** en légère sous pression, par rapport au reste de l'enceinte **1.** Ceci permet de garantir un confinement satisfaisant des gaz réactifs, à l'intérieur de cette chambre **4.** A titre d'exemple, la différence entre la pression **P1** du reste de l'enceinte **1** et la pression **P4** de la chambre **4** (voir figure 2) est comprise entre 1 et 20 Pa, notamment entre 2 et 10 Pa, typiquement voisine de 5 Pa. De façon avantageuse, la valeur de **P1** peut être légèrement inférieure à la pression atmosphérique, par exemple entre 10 et 100 Pa, notamment entre 30 et 70 Pa, typiquement 50 Pa au-dessous de cette valeur de pression atmosphérique.

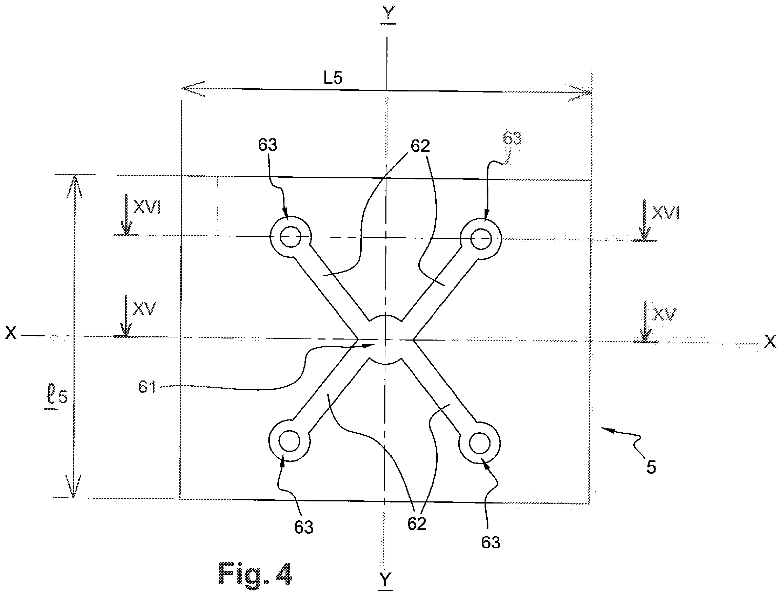

On va tout d'abord décrire, en référence aux figures 4, 5, 15 et 16, la structure de l'un **5** des trois modules d'injection, étant entendu qu'elle est identique pour chacun de ces modules. Dans l'exemple illustré, on a prévu trois modules mais, à titre de variante, la chambre peut être équipée d'un nombre différent de tels modules, par exemple compris entre deux et cinq. Le fait de prévoir des modules élémentaires dont on peut faire varier le nombre en fonction de chaque installation est avantageux. En effet, cela permet notamment de modifier les débits de gaz, ainsi que les différentes concentrations de gaz dans chacun de ces modules.

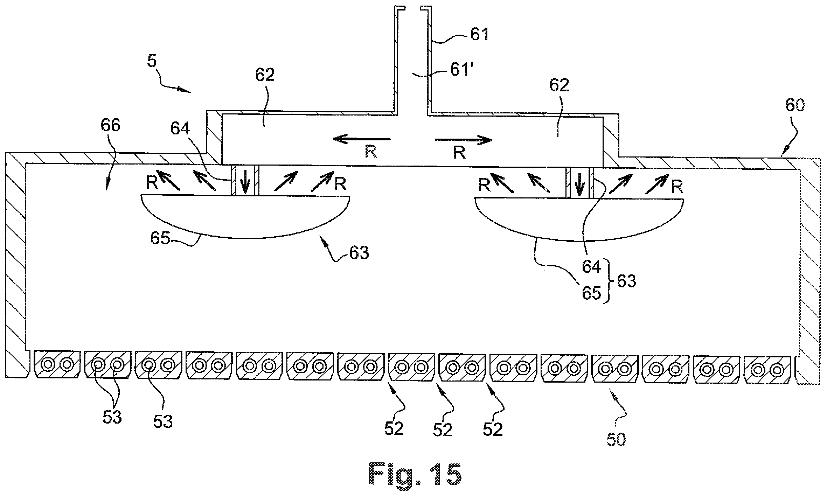

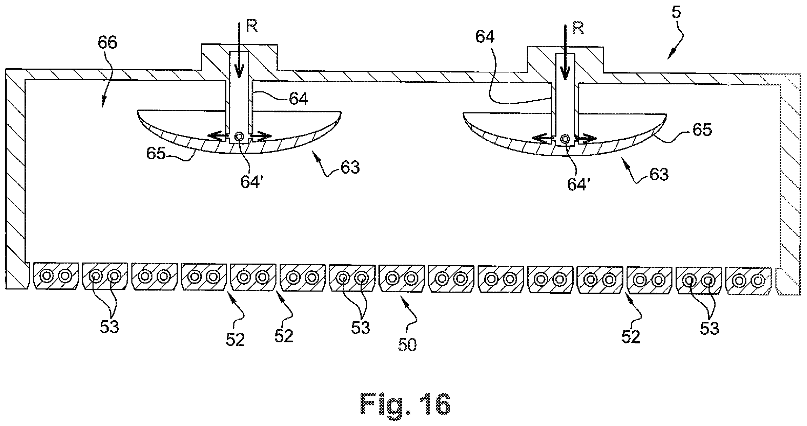

Les figures 15 et 16 illustrent le module **5** selon deux lignes de coupe différentes, prises à distance l'une de l'autre selon l'axe latéral Y-Y. La figure 15 est une vue en coupe médiane, à savoir selon la ligne XV-XV qui correspond à l'axe longitudinal médian X-X, alors que la figure 16 est une vue en coupe selon la ligne XVI-XVI, laquelle s'étend entre le milieu de l'enceinte et l'un des bords latéraux de cette enceinte.

Comme le montrent ces figures 15 et 16, le module **5** comprend une plaque de base **50** (visible également sur la figure 3), dont l'épaisseur est par exemple comprise entre 0.5 cm et 2.0 cm. La longueur **L5** de ce module, à savoir sa dimension selon l'axe X-X, est par exemple comprise entre 20 cm et 60 cm. La largueur **I5** de ce module, à savoir sa dimension selon l'axe Y-Y, est par exemple comprise entre 20 cm et 55 cm.

A ses deux extrémités longitudinales, cette plaque **50** est munie de moyens permettant sa fixation amovible, soit sur une plaque identique appartenant au module voisin, soit sur l'un ou l'autre des dispositifs **7** ou **7'.** Dans l'exemple décrit, on peut par exemple retrouver respectivement des tenons et des mortaises non représentés, permettant une fixation par emboîtement avec un élément complémentaire, également non représenté.

Cette plaque **50** est tout d'abord percée d'orifices **52** destinés à l'injection de gaz en direction du substrat, qui s'étendent entre les faces opposées de cette plaque. Dans l'exemple illustré, ces orifices sont sensiblement verticaux. Néanmoins, à titre de variante, on peut prévoir qu'ils s'étendent de manière oblique, en formant un angle par exemple compris entre 0 et 60° par rapport à la verticale. Dans ce cas, le débouché de ces orifices est avantageusement tourné vers l'aval, en référence au sens de défilement du substrat.

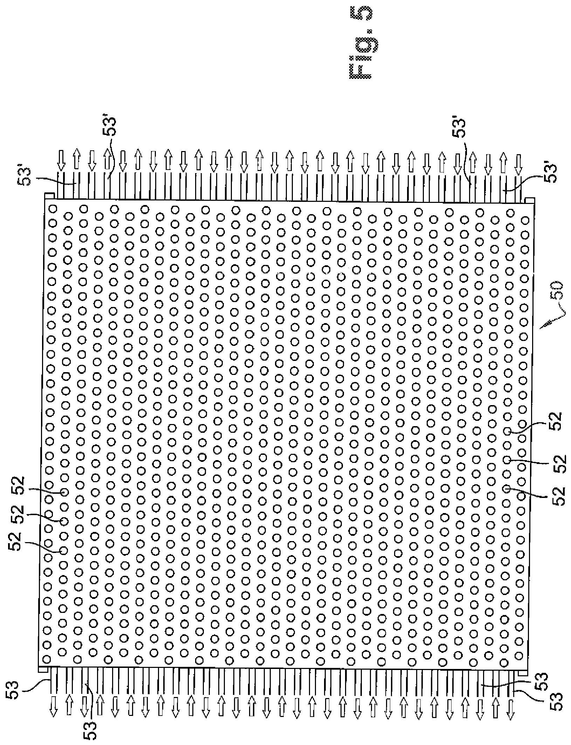

Le nombre de ces orifices, qui sont répartis de manière régulière sur toute la surface de la plaque comme le montre plus particulièrement la figure 5, est par exemple compris entre 100 et 2000, typiquement voisin de 1000. Avantageusement on aménage, à l'extrémité de chaque trou un congé non représenté, destiné à faciliter la répartition du gaz.

Cette plaque **50** est en outre percée, dans son épaisseur, d'orifices transversaux **53** qui relient les faces latérales de cette plaque. Chaque orifice est mis en communication avec une arrivée ou une évacuation d'un fluide caloporteur, typiquement de l'eau. Cette mise en communication est par exemple réalisée grâce à des embouts, représentés de façon schématique. De préférence, il y a alternance entre les embouts **53'** destinés à l'entrée de fluide et les embouts **53"** destinés à la sortie de ce fluide (voir figure 5), pour obtenir un refroidissement homogène sur toute la surface de la plaque **50.**

A nouveau en référence aux figures 15 et 16, le module **5** comprend, outre la plaque **50** précitée, un corps creux **60** formant capot, qui est fixé sur la face supérieure de la plaque grâce à tout moyen approprié. On préférera un moyen de fixation amovible, par exemple de type tenon et mortaise. On peut en particulier prévoir des tenons non représentés, faisant saillie à partir de la face supérieure de la plaque et pénétrant dans des mortaises ménagées dans les faces en regard du capot **60.**

Ce capot **60** est équipé, à sa partie supérieure, d'un col **61** (figures 4 et 15) délimitant un canal d'admission **61'** des gaz. Ce col est mis en communication, par tout moyen approprié, avec une source non représentée d'alimentation en gaz réactifs. Ce canal **61'** débouche latéralement dans des passages horizontaux **62,** prévus en partie supérieure du capot, lesquels communiquent avec des organes de diffusion **63.** Comme le montre notamment la figure 4, ces passages **62** s'étendent en étoile à partir du col **61.** Le nombre des organes de diffusion **63,** pour chaque module **5,** est par exemple compris entre un et dix. Dans l'exemple illustré, on retrouve quatre organes de diffusion, dont la disposition est visible sur la figure 4.

Chaque organe de diffusion **63** comprend tout d'abord un tube **64** vertical, dans lequel sont ménagés, perpendiculairement à la surface de ce tube, des orifices **64'** dont les dimensions sont typiquement de 0,2mm à 1mm. Chaque organe **63** comprend en outre un élément de diffusion **65,** dit en forme de parasol inversé, dont la concavité est tournée vers le haut du capot. On notera que les différents éléments de diffusion **65** ne sont pas placés selon l'axe longitudinal médian X-X. De la sorte, ils sont coupés par le milieu sur la figure 16, mais en revanche pas sur la figure 15.

Ces différents organes de diffusion **63** sont placés dans une enceinte principale **66,** dite d'homogénéisation des gaz. Le trajet des gaz réactifs est matérialisé par les différentes flèches **R.** La partie inférieure de cette enceinte communique avec l'entrée des différents orifices d'injection **52.** Selon une variante non représentée, on peut prévoir d'introduire un thermocouple dans la plaque **50** de façon à contrôler la température de cette dernière. Selon une autre variante non représentée, on peut avantageusement prévoir que chaque module **5, 5', 5"** est mobile selon l'axe Z-Z par rapport à la sole **10,** de façon à faire varier la hauteur de la chambre de réaction **4.**

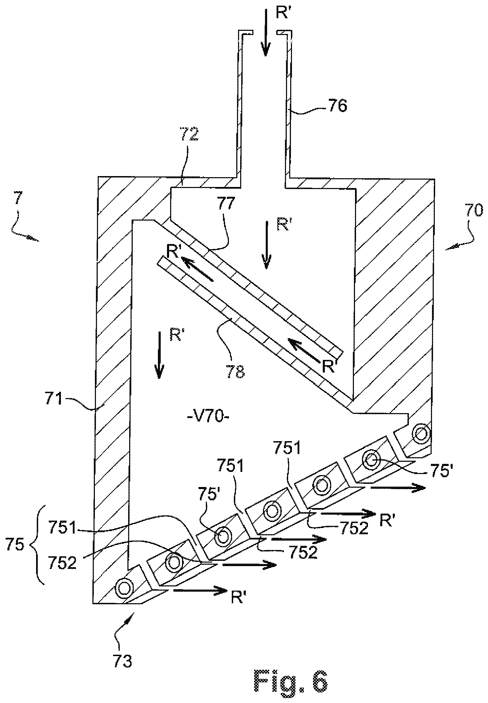

En référence désormais à la figure 6, le premier dispositif **7** de mise en circulation comprend un corps **70** délimitant un volume intérieur **V70** bordé par des parois périphériques **71,** une paroi supérieure **72** et une plaque formant paroi de fond **73.** Cette dernière, qui s'étend de manière oblique, est munie de moyens de fixation amovible, à la fois sur le module **5** adjacent et sur l'unité amont **8.** A titre d'exemple, des tenons non représentés équipant la paroi **73** peuvent pénétrer dans des mortaises également non représentées, ménagées dans les parois en regard respectivement du module **5** et de l'unité **8.**

La plaque oblique **73** est creusée d'orifices de circulation, régulièrement répartis. Chaque orifice **75** possède un tronçon supérieur **751** oblique, s'étendant à peu près perpendiculairement au plan de la plaque **73,** ainsi qu'un tronçon inférieur **752** s'étendant horizontalement, à savoir de manière sensiblement parallèle à la direction de défilement du substrat. La plaque **73** est en outre percée de tubes latéraux **75',** destinés à l'écoulement d'un fluide caloporteur, notamment de l'eau, pour refroidir la pièce **73.** Avantageusement, on prévoit que ce fluide s'écoule selon des sens alternés entre deux tubes adjacents, de manière similaire à l'écoulement de fluide dans les orifices **53** décrits ci-dessus. Selon une variante non représentée, on peut prévoir d'introduire un thermocouple dans la plaque **70** de façon à contrôler la température de cette dernière.

Le corps **70** est équipé, à sa partie supérieure, d'au moins un col délimitant un canal de circulation des gaz, lequel débouche dans le volume intérieur précité. A titre d'exemple, on peut prévoir deux cols identiques, prévus l'un derrière l'autre selon l'axe latéral YY. Ainsi, sur la figure 6, l'un **76** de ces cols est illustré, étant entendu que l'autre est situé en arrière de celui qui est visible.

Comme on le verra dans ce qui suit, chaque col peut être raccordé sélectivement, soit à une source de gaz réactifs, soit à une source de mise en dépression. Le dispositif **7** est en outre équipé de deux déflecteurs **77** et **78,** réalisés par exemple sous forme de tôles minces. Ces déflecteurs, qui sont fixés sur les parois du corps **70** par tout moyen approprié, définissent un trajet gazeux globalement en forme de Z entre le canal d'admission et les orifices d'injection. Cela permet de rallonger ce trajet et, par conséquent, d'augmenter le temps de séjour des gaz réactifs et d'homogénéiser les gaz dans le volume **V70.** Sur la figure 6, le trajet des gaz réactifs est matérialisé par les différentes flèches **R'.**

La structure du dispositif **7'** est de préférence identique à celle du dispositif **7,** tel que décrit ci-dessus. Cela est avantageux, notamment en termes de simplicité globale de construction de l'installation conforme à l'invention. Sur les figures, les éléments mécaniques de ce dispositif **7',** qui correspondent à ceux du dispositif **7,** sont affectés des mêmes numéros de référence auxquels est rajouté le suffixe « prime ». Sur les figures, on note que ces deux dispositifs **7** et **7'** sont agencés de manière mutuellement symétrique, par rapport à un plan transversal médian de la chambre réactionnelle.

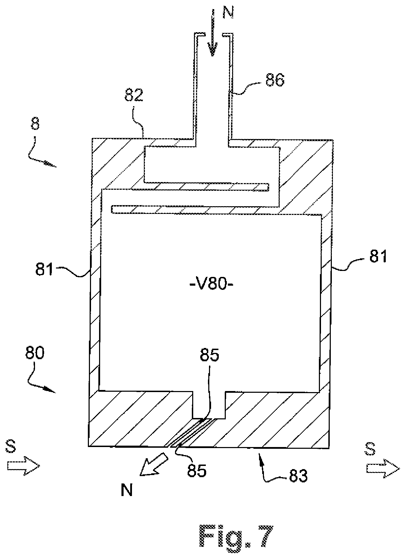

Comme montré en figure 7, la première unité **8** de distribution de gaz barrière comprend un corps **80** délimitant un volume intérieur **V80** bordé par des parois périphériques **81,** une paroi supérieure **82** et une plaque de fond **83.** Cette dernière est munie de mortaises non représentées, aptes à coopérer avec les tenons équipant le dispositif adjacent **7,** en vue de la fixation amovible mutuelle de cette unité **8** et de ce dispositif **7.**

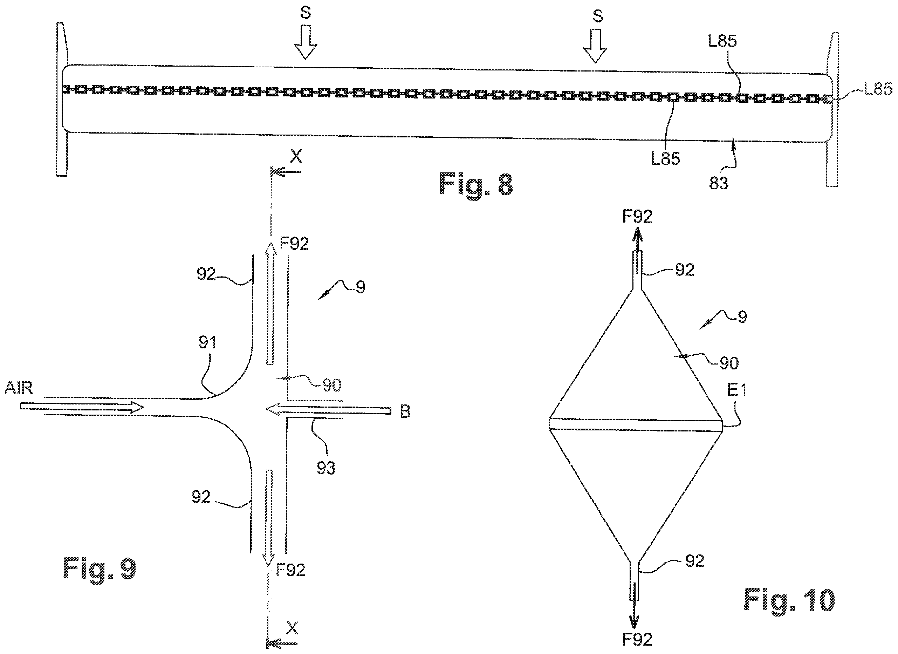

La plaque **83** est creusée de fentes de distribution **85,** lesquels sont représentés vus de dessous à la figure 8. Ces fentes **85** sont réparties selon trois lignes **L85,** disposées avantageusement en quinconces. De manière typique, chaque fente **85** présente une longueur comprise entre 0.3 cm et 1.0 cm, ainsi qu'une largeur comprise entre 0.02 cm et 0.5 cm. Comme le montre la figure 7, en vue de côté, les fentes sont ménagées de façon inclinée par rapport à la verticale, selon un angle **A85** compris par exemple entre 0° et 60°. En d'autres termes, ces fentes permettent une distribution de gaz dirigée vers l'entrée de la chambre de réaction **4,** à savoir selon un sens opposé à celui du défilement du substrat.

Le corps **80** est enfin équipé, à sa partie supérieure, d'au moins un col définissant un canal d'entrée de gaz, lequel débouche dans le volume intérieur précité. A titre d'exemple, on peut prévoir deux cols identiques, prévus l'un derrière l'autre selon l'axe latéral YY. Ainsi, sur la figure 7, l'un **86** de ces cols est illustré, étant entendu que l'autre est situé en arrière de celui qui est visible. Comme on le verra dans ce qui suit ce col peut être raccordé à une source de gaz neutre. Sur la figure 7, le trajet du gaz neutre est matérialisé par les différentes flèches **N.**

La structure de l'unité **8'** est de préférence identique à celle de l'unité **8,** telle que décrite ci-dessus. Sur les figures, les éléments mécaniques de cette unité **8',** qui correspondent à ceux de l'unité **8,** sont affectés des mêmes numéros de référence auxquels est rajouté le suffixe « prime ». Sur les figures, on note que ces deux unités **8** et **8'** sont agencées de manière mutuellement symétrique, par rapport à un plan transversal médian de la chambre réactionnelle. En particulier, en vue de face, les fentes de distribution de gaz barrière sont dirigées vers l'extérieur de la chambre de réaction **4,** à savoir que les fentes de l'unité amont **8** sont tournées vers l'amont, alors que les fentes de l'unité aval **8'** sont tournées vers l'aval.

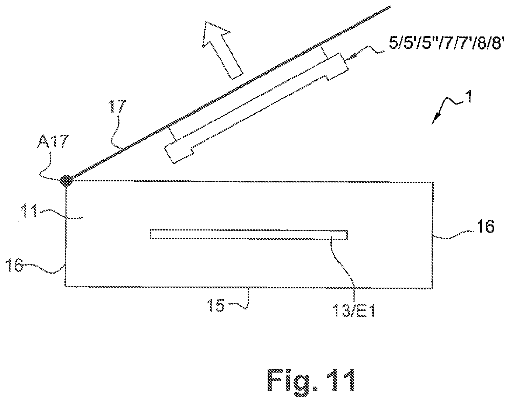

Selon une variante de l'invention, représentée à la figure 11, l'enceinte principale **1** est réalisée sous forme d'un caisson, possédant des parois respectivement avant **11** et arrière (non représentée), dans lesquelles sont ménagées des fentes respectives, dont seule celle **13** est illustrée. Ces fentes, qui s'étendent seulement sur une partie de la largeur du caisson **1,** définissent respectivement l'entrée **E1** et la sortie **S1** de l'enceinte. Ce caisson **1** comprend en outre un fond **15,** des parois latérales **16,** ainsi qu'une paroi supérieure **17.** Cette dernière est réalisée sous forme d'une trappe pivotante, montée à rotation sur le sommet d'une des parois latérales autour d'un axe **A17,** parallèle à la direction longitudinale de l'enceinte, à savoir la direction de défilement du substrat.

Comme illustré schématiquement sur cette figure, les différents organes mécaniques **5, 5', 5", 7, 7', 8** et **8',** décrits ci-dessus, sont fixés sur la trappe **17.** De façon préférée, cette fixation est de type amovible Le mode de réalisation, illustré sur cette figure 11, présente des avantages spécifiques. En effet, un opérateur est à même de soulever aisément la trappe de façon à accéder au volume intérieur de l'enceinte **1.** Dans ces conditions, il peut procéder de manière commode à un nettoyage, notamment d'éventuels dépôts carbonés susceptibles d'être présents sur les organes mécaniques précités et/ou sur les parois intérieures.

En référence désormais aux figures 9 et 10, l'ensemble d'aspiration **9** comprend une boîte commune de transition **90,** dans lequel débouchent respectivement un couloir d'arrivée **91,** deux conduites d'extraction **92,** ainsi qu'un couloir de jonction **93.** Le couloir d'arrivée **91,** ou couloir aval, permet l'alimentation du substrat vers la boîte **90.** Le couloir de jonction **93,** ou couloir aval, permet le transfert entre cette boîte et l'entrée **E1** de l'enceinte principale. Ces deux couloirs présentent des formes et dimensions adaptées à celles du substrat défilant. Dans l'exemple illustré, ils sont donc de forme rectangulaire. De manière avantageuse, on ménage un espace intercalaire aussi faible que possible, entre les faces en regard de ce substrat et de chacun de ces couloirs.

En vue de face, comme montré plus précisément sur la figure 10, la boîte **90** présente une forme globale de losange. En d'autres termes sa section diminue continûment, depuis sa jonction avec chacun des couloirs **91** et **93,** vers sa jonction avec chacune des conduites **92.** Chaque conduite **92** présente une forme tubulaire, par exemple sensiblement cylindrique, dont la section est par exemple comprise entre 15 et 60 millimètres. Elle est mise en communication avec une source de mise en dépression, non représentée, de tout type approprié.

La structure de l'ensemble **9'** est de préférence identique à celle de l'ensemble **9,** telle que décrite ci-dessus. Sur les figures, les éléments mécaniques de cet ensemble **9',** qui correspondent à ceux de l'ensemble **9,** sont affectés des mêmes numéros de référence auxquels est rajouté le suffixe « prime ». Sur les figures, on note que ces deux ensembles d'aspiration **9** et **9'** sont agencés de manière mutuellement symétrique, par rapport à un plan transversal de l'installation.

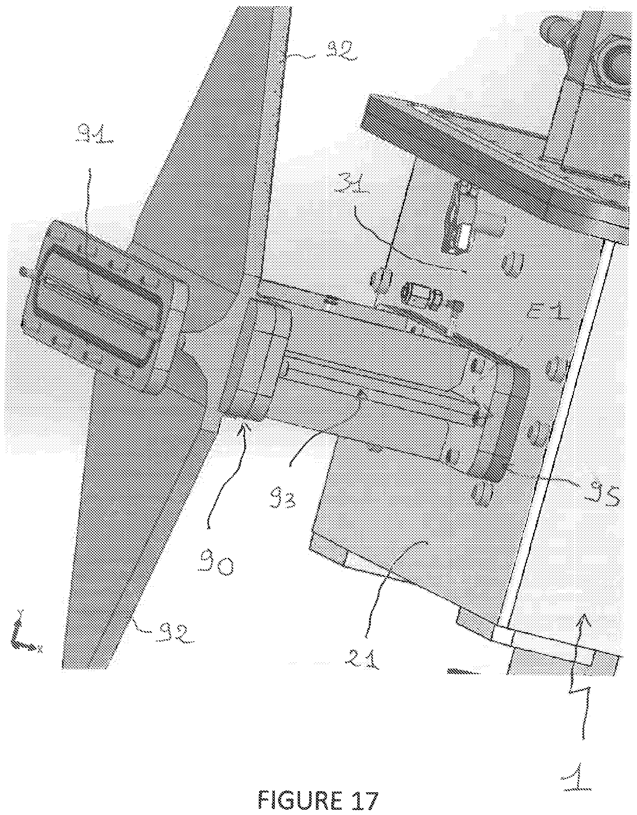

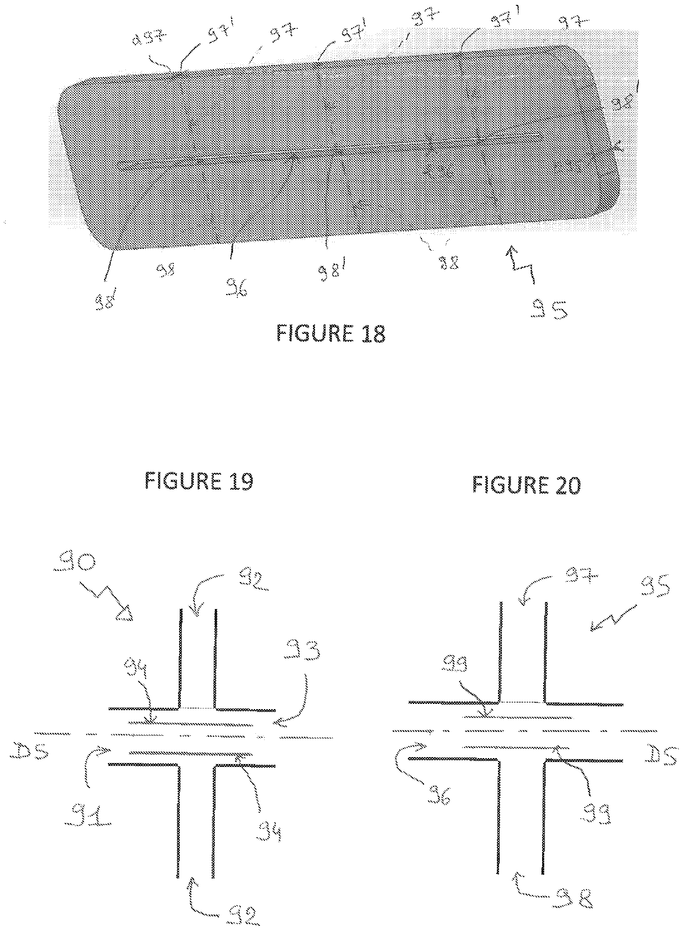

Selon une variante avantageuse de l'invention, décrite en référence aux figures 17 et 18, on peut intercaler une plaque supplémentaire **95,** formant organe complémentaire d'injection. Cette plaque **95,** de type à lame ou couteau d'air, est prévue entre le couloir de jonction **93** et les parois avant **21** et **31** de l'enceinte **1,** délimitant l'entrée **E1.** Cette plaque **95,** de forme rectangulaire, est creusée d'une fente principale **96** s'étendant dans le prolongement à la fois du couloir de jonction **93** et de l'entrée **E1** précitée.

Par ailleurs, différents orifices s'étendent dans la plaque, de manière à relier la fente **96** avec les parois respectivement supérieure et inférieure de la plaque **95.** Sur la figure, on note **97** les orifices supérieurs, dont les débouchés **97'** opposés à la fente sont visibles, ainsi que **98** les orifices inférieurs, dont les débouchés **98'** adjacents à la fente sont visibles. Le trajet de ces orifices **97** et **98** est matérialisé en traits pointillés, sur cette figure 18. Chaque orifice **97, 97'** est mis en communication avec une source non représentée de gaz barrière, notamment d'azote.

La fixation de cette plaque **95,** par rapport à la fois au couloir **93** et à la chambre réactionnelle **4,** est assurée par tout moyen approprié. On préférera une fixation de type amovible, par exemple par vissage. Par ailleurs, on prévoit des moyens d'étanchéité, non représentés sur les figures 17 et 18. Ces moyens, de tout type connu en soi, assurent l'étanchéité entre les faces en regard, d'une part de la plaque **95** et du couloir **93,** d'autre part de la plaque **95** et de la chambre 4.

Dans l'exemple, on a ménagé trois orifices **97** et **98,** à la fois en partie basse et en partie haute de la plaque. A titre de variante, ce nombre d'orifices peut être différent, étant entendu qu'on préfère que le nombre d'orifices inférieurs et le nombre d'orifices supérieurs soient identiques. De même, on préfère que les orifices soient ménagés à équidistance les uns des autres. A titre d'exemple, la plaque présente une épaisseur **E95** typiquement voisine de 10 millimètres, la fente présente une largeur **I96** typiquement voisine de 5 millimètres, alors que chaque orifice présente un diamètre **d97** typiquement voisin de 4.5 millimètres.

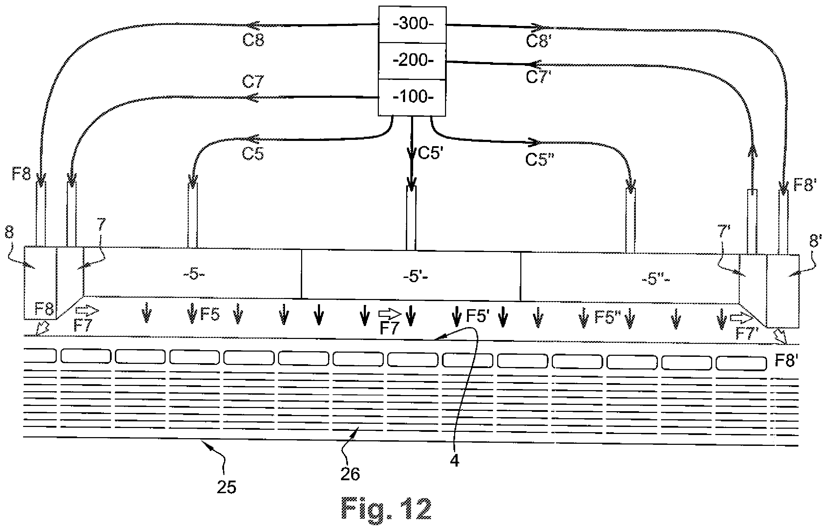

On va maintenant décrire, en référence aux figures 12, 13 et 14, trois modes de mise en oeuvre de l'installation conforme à l'invention, telle que décrite ci-dessus. Sur ces figures on a illustré une source **100** de gaz réactifs, une source **200** de mise en dépression, une source **300** d'un gaz barrière, ainsi que des connexions **C5, C7, C7', C8** et **C8'.** Ces connexions peuvent être de tout type approprié : on peut ainsi prévoir des connexions de type simple et/ou des connexions de type multiple.

On va tout d'abord décrire des aspects communs à ces trois modes de réalisation, à savoir : le mode de transfert du substrat à traiter, l'inertage du volume intérieur de l'enceinte 1, la mise en oeuvre des éléments chauffants, le mode d'injection de gaz réactifs par les modules **5** à **5",** ainsi que la mise en oeuvre des ensembles **9, 9'** et des unités **8, 8'.**

De façon typique, le défilement du substrat est opéré selon un procédé « roll to roll », de type connu en soi. Le substrat est alimenté depuis une bobine amont vers une bobine aval, toutes deux non représentées. Le substrat peut être notamment une feuille ou bande métallique, ou encore un tissu de carbone. Son l'épaisseur peut typiquement être comprise entre 15 µm et 200 µm, et sa largeur entre 10 mm et 1000 mm ou plus. Le métal constitutif du substrat est par exemple l'aluminium pur ou une autre nuance d'aluminium, ou encore de l'acier inoxydable.

Selon la variante principale de l'invention, la réaction est mise en oeuvre sur un substrat défilant. En d'autres termes, le substrat est admis à l'entrée de l'installation, puis défile continûment en étant soumis à la réaction souhaitée. Sur les figures 1, 7 et 8, les flèches **S** matérialisent le déplacement de ce substrat. A titre de variante subsidiaire, on peut prévoir que le substrat est admis à l'entrée de l'installation, puis s'arrête à un emplacement précis. Une fois qu'il est immobile, il est soumis à la réaction puis, une fois cette réaction achevée, le substrat est à nouveau mis en mouvement afin d'être évacué par la sortie de l'installation.

Comme le montre notamment la figure 9, lorsque le substrat progresse dans le couloir d'admission **91,** il entraîne avec lui sur ses deux faces un flux d'air ambiant, matérialisé sur la figure 9 par la flèche **AIR.** Ce flux d'air ambiant s'oppose à un flux de gaz barrière qui évite toute entrée significative de cet air ambiant, en direction de l'enceinte principale **1.** Ce gaz barrière est formé par le mélange entre le gaz neutre **N,** injecté par l'unité **8,** et un gaz d'inertage.

En référence à la figure 2, on injecte une première fraction de gaz d'inertage dans la partie inférieure 2, selon les flèches **I1.** Ce gaz permet de chasser l'air depuis cette partie inférieure, vers la partie supérieure. Le passage de ce gaz d'inertage et de cet air est permis par la présence d'interstices, existant à l'interface entre ces deux parties.

Par ailleurs, on injecte une deuxième fraction de gaz d'inertage dans la chambre principale, selon les flèches **I2.** Cette injection est mise en oeuvre, de préférence, à la fois en amont et en aval de cette chambre principale. Le gaz d'inertage, injecté à la fois selon **I1** et **I2,** est mélangé au gaz neutre **N** injecté à travers les fentes **85** de chaque unité **8** (voir figure 7). Ce mélange forme un gaz barrière, dont le flux est matérialisé par la flèche **B** sur la figure 9.

Les sources de mise en dépression sont également activées, de sorte que ce gaz barrière **B** bloque l'air ambiant, au niveau de la boîte de transition. Cet air et ce gaz barrière sont évacués par les conduites **92** selon les flèches **F92,** portées sur les figures 9 et 10. Le flux de gaz barrière permet aussi d'éviter la sortie de l'enceinte de gaz réactionnels par le couloir **91;** en effet, le flux de gaz barrière est avantageusement évacué à travers les conduites **92** vers un centre de traitement de gaz (non représenté sur les figures).

A titre de sécurité supplémentaire, on peut prévoir d'injecter une fraction complémentaire de gaz barrière, par les orifices **97** et **98** de la plaque **95.** Cette injection peut être mise en oeuvre de façon permanente, ou encore de manière ponctuelle. Elle permet de réaliser un rideau ou couteau de gaz barrière, qui est utile notamment en cas de défaillance des boîtes de transition 90 et/ou d'entrée intempestive d'oxygène dans la chambre réactionnelle. L'utilisation de cette plaque d'injection complémentaire **95** permet en outre de réduire la quantité d'oxygène dans la chambre principale.

Après avoir rencontré le flux de gaz barrière dans le couloir **93,** le substrat progresse dans la zone de préchauffage, où il est tout d'abord plaqué contre la sole **10,** par l'intermédiaire du rouleau tendeur **38.** Puis ce substrat est porté à une température appropriée pour le traitement souhaité. A titre d'exemple, dans le cas d'un substrat en aluminium, on préfère que cette température soit inférieure au point de fusion du métal, soit environ 650 °C. Etant donné que le substrat est maintenu sous tension et présente un allongement qui augmente avec la température, on préfère tout particulièrement le placer à une température bien inférieure à cette température de fusion, c'est-à-dire de préférence à une température qui ne dépasse pas 620 °C à 630 °C.

Dans le présent mode de réalisation, le chauffage se fait par contact mécanique frottant du substrat sur la sole **10,** elle-même chauffée depuis sa surface inférieure par les éléments chauffants. Cette sole fixe, qui délimite la chambre de réaction **4** comme expliqué ci-dessus, est avantageuse en ce qu'elle évite le dépôt de nanotubes sur les éléments chauffants. Dans d'autres modes de réalisation, non représentés sur les figures, on peut envisager un dépôt sur les deux faces opposées du substrat. Dans ce cas, un chauffage par rayonnement est préféré. En effet, les nanotubes étant noirs, ils absorbent le rayonnement Infra Rouge.

Ce substrat est ensuite soumis au traitement proprement dit, dans la chambre réactionnelle. Les gaz réactifs comprennent un gaz « source de carbone » et un catalyseur. Le catalyseur peut avantageusement être du ferrocène. Le gaz « source de carbone » peut être du C₂H₂. L'injection de gaz réactifs est mise en oeuvre de la façon suivante. Le catalyseur préféré étant un solide assez mal soluble, on n'obtiendra pas en solution une concentration de catalyseur suffisante pour pouvoir l'évaporer dans le gaz porteur « source de carbone » avant l'introduction. On l'injecte donc comme aérosol, et on suppose qu'avant d'arriver en contact avec le substrat ces gouttelettes s'évaporent complètement. La phase gazeuse en contact avec le substrat est donc homogène. Une technique alternative serait le dépôt préalable du catalyseur sur la surface dans une étape de procédé séparée ; dans ce cas on pourrait effectivement introduire le gaz « source de carbone » autrement que par aérosol (à savoir en phase gazeuse homogène). Cependant, on préfère le procédé par aérosol au procédé avec dépôt préalable du catalyseur, car il permet de réaliser des nanotubes verticalement alignés de meilleure qualité et de plus grande hauteur.

L'injection de gaz réactifs, par les modules **5** à **5",** est matérialisée par les flèches respectives **F5** à **F5",** portées sur les figures 12 à 14. Cette injection est opérée verticalement, à savoir perpendiculairement à la direction de défilement du substrat. Comme cela sera expliqué ci-dessous, cette injection principale peut être complétée par une injection secondaire, réalisée grâce au dispositif **7** et/ou au dispositif **7'.**

Afin d'éviter que l'air ambiant ne pénètre par la sortie **S1** de l'enceinte, en direction de la chambre réactionnelle, l'ensemble aval **9'** et l'unité aval **8'** coopèrent mutuellement, de manière identique à ce qui a été décrit ci-dessus pour l'ensemble amont **9** et l'unité amont **8.** L'injection de gaz barrière est matérialisée par la flèche **F8'** sur les figures 12 à 14.

Dans le premier mode de réalisation, illustré en référence à la figure 12, le dispositif amont **7** est utilisé en mode « injection ». Dans ces conditions, son col **76** est raccordé à la source **100** de mélange gazeux réactif. Ce dernier s'écoule donc, en service, depuis cette source vers le volume **V70,** avant d'être injecté dans la chambre via les orifices **75.** Ce mélange est donc transporté, dans cette chambre **4,** selon une direction parallèle à celle de défilement du substrat, et selon le même sens. Ce transport de mélange gazeux est matérialisé par la flèche **F7** sur la figure 12.

En revanche, le dispositif aval **7'** est utilisé en mode « aspiration » ou « extraction ». Dans ces conditions, Dans ces conditions, son col **76'** est raccordé à la source **200** de mise en dépression. Le mélange gazeux est donc aspiré, en service, depuis la chambre **4** vers le volume **V70',** via les orifices. Cette extraction de mélange gazeux est matérialisée par la flèche **F7'** sur la figure 12.

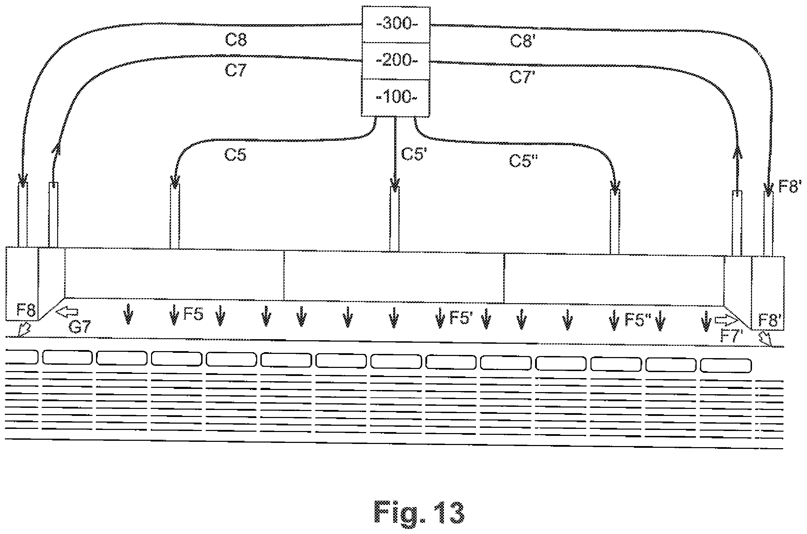

Dans le deuxième mode de réalisation, illustré en référence à la figure 13, les dispositifs **7** et **7'** sont tous deux utilisés en mode « aspiration » ou « extraction ». Dans ces conditions, ils sont tous deux raccordés à la source **200.** Cette double extraction de mélange gazeux est matérialisée par les flèches respectives **G7** et **F7'** sur la figure 13. Une partie du mélange est donc transportée selon une direction parallèle à celle de défilement du substrat et selon le même sens, alors qu'une autre partie de ce mélange est transportée selon une direction parallèle à celle de défilement du substrat mais selon le sens opposé. L'injection de gaz réactif est donc réalisée uniquement depuis les modules **5** à **5".**

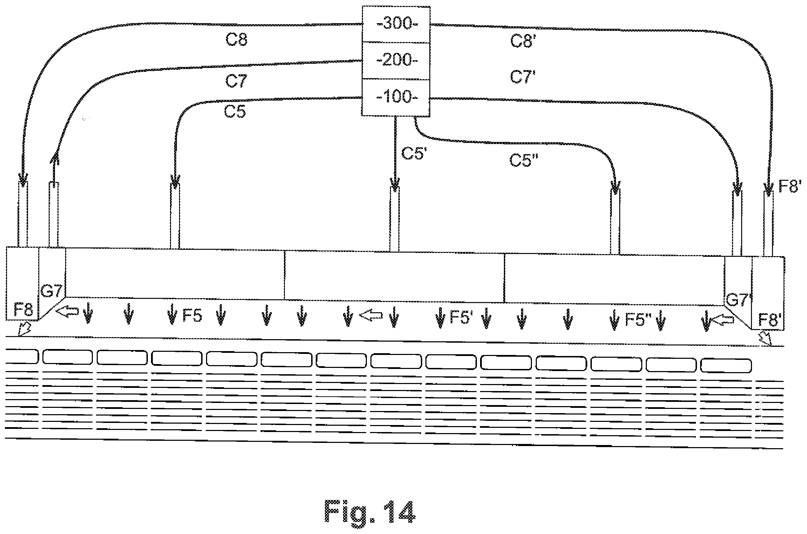

Dans le troisième mode de réalisation, illustré en référence à la figure 14, le dispositif amont **7** est utilisé en mode « extraction », de sorte qu'il est raccordé à la source **200.** En revanche, le dispositif aval **7'** est utilisé en mode « injection », de sorte qu'il est raccordé à la source **100.** Le mélange gazeux est donc transporté, dans la chambre **4,** selon une direction parallèle à celle de défilement du substrat, mais selon un sens opposé. Ces opérations sont matérialisées par les flèches respectives **G7** et **G7'** sur la figure 14.

Dans l'un ou l'autre des trois modes de réalisation décrits ci-dessus, le débit de gaz et/ou la concentration en réactif peuvent être différents les uns des autres pour les modules **5, 5', 5"** et, le cas échéant, pour le dispositif **7** ou **7'.** A titre de variante, pour au moins deux de ces organes mécaniques d'injection, le débit de gaz et/ou la concentration en réactif peuvent être différents. Au cours de la synthèse de VACNT, la concentration de réactif diminue le long de la chambre de réaction, ce qui tend à modifier la croissance de ces VACNT. Le fait de régler le débit et/ou la concentration dans les deux modules **5'** et **5"** permet en particulier de garder une concentration sensiblement constante le long de la chambre.

Comme explicité ci-dessus, l'installation conforme à l'invention présente une grande modularité. Cela provient notamment du fait que les dispositifs **7** et **7'** peuvent assurer une fonction d'injection ou d'extraction, ce qui permet des mises en oeuvre différentes de cette installation. L'homme du métier choisira l'une ou l'autre de ces mises en oeuvre afin d'obtenir une croissance optimale, en fonction notamment des paramètres suivants :
- nature et dimensions du substrat ;
- nature du gaz réactif ;
- conditions opératoires.

A cet égard on notera que, dans US 2011/3182560, les conduites d'extraction de gaz, prévues de part et d'autre de la zone de synthèse, ne peuvent pas adopter de configuration fonctionnelle supplémentaire. Par ailleurs, en supposant que ces conduites soient mises en oeuvre dans une configuration d'injection, cette deuxième direction d'injection serait parallèle à la première direction d'injection par les tubes prévus en regard de la chambre de synthèse. En d'autres termes, ces conduites d'extraction ne sont pas adaptées pour injecter le mélange actif selon une deuxième direction, différente de cette première direction.

La figure 19 illustre une variante avantageuse de l'invention, concernant la boîte de transition **90** illustrée aux figures 9 et 10. Selon cette variante, deux plaques **94** formant déflecteurs s'étendent selon la direction DS de défilement du substrat, de part et d'autre de ce dernier. Ces déflecteurs **94** sont placés en regard des débouchés des deux conduites d'extraction **92,** tout en faisant saillie longitudinalement à la fois dans le couloir d'arrivée **91** et le couloir de jonction **93.** En vue transversale, ces déflecteurs s'étendent avantageusement sur une partie substantielle de la boîte précitée **90.**

La figure 20 illustre une variante avantageuse de l'invention, analogue à celle montrée en figure 19, concernant la plaque complémentaire d'injection **95** illustrée aux figures 17 et 18. Selon cette variante, deux plaques **99** formant déflecteurs, analogues à celles **94** de la figure 19, s'étendent selon la direction de défilement du substrat, de part et d'autre de ce dernier. Ces déflecteurs **99** sont placés, à l'intérieur de la fente **96,** en regard des débouchés des orifices **97** et **98.** En vue transversale, ces déflecteurs s'étendent avantageusement sur une partie substantielle la boîte précitée **90.**

Les déflecteurs respectifs **94** et **99,** décrits ci-dessus en référence aux figures 19 et 20, présentent des avantages spécifiques. En effet, la Demanderesse a constaté que l'utilisation de ces déflecteurs permet de réduire la perturbation mécanique, subie par le substrat en défilement. En effet les flux gazeux respectivement évacués par les conduites **92** ou admis par les orifices **97** et **98,** s'écoulent de façon sensiblement parallèle à la direction de défilement du substrat. En revanche, en l'absence de tels déflecteurs, les flux précités sont respectivement évacués ou admis perpendiculairement à cette direction de défilement. Dans ce dernier cas, on a tendance à constater une instabilité du substrat, l'apparition de vibrations subies par ce dernier, ainsi qu'un équilibre instable des forces exercées sur ce substrat.

Ces déflecteurs **94** et **99** sont également avantageux, en ce qu'ils garantissent une sécurité accrue de l'installation. En effet, grâce à l'utilisation de ces déflecteurs, la dynamique des fluides est très peu, voire pas du tout modifiée par la présence ou l'absence du substrat. Ainsi l'air ne pénètre sensiblement pas, même en l'absence du substrat, qui serait due notamment à une rupture accidentelle de ce dernier. Une telle situation accidentelle serait donc, malgré tout, stable et peu perturbante pour le substrat. L'efficacité globale est donc indépendante de la présence du substrat.

Avec une installation selon l'invention telle que décrite ci-dessus, avec trois modules **5, 5', 5"** d'injection de gaz réactifs et une dimension des plaques de base **50** d'environ 300 mm x 300 mm, fonctionnant avec un mélange de toluène / ferrocène (où le ferrocène est le catalyseur et le toluène son gaz porteur) et du C₂H₂ comme gaz « source de carbone » à une pression comprise entre 0,9 bar et 1,1 bar et une température du substrat aluminium de l'ordre de 580 à 615°C on peut atteindre une vitesse de croissance des nanotubes de carbone verticalement alignés comprise entre environ 1 µm/min et environ 15 µm/min. Dans le cas où le substrat est défilant, au sens décrit ci-dessus, sa vitesse de défilement se situe typiquement entre 0,1 m/h et 10 m/h.

### Exemples

L'invention est illustrée ci-dessous par des exemples qui n'en limitent cependant pas la portée

La croissance de nanotubes de carbone (ci-après NTC) se fait en présence d'une source de catalyseur et d'une source de carbone. Dans l'installation conforme à l'invention, la source catalytique en particulier du ferrocène, est dissoute dans une solution de toluène à différents pourcentages. Le ferrocène se décompose à une température de 826°C, ce qui permet de faire une croissance de NTC à 850°C. Cependant, pour une croissance à plus basse température, le ferrocène ne se décompose pas, il est donc nécessaire d'utiliser de l'hydrogène pour abaisser la température de décomposition du ferrocène entre 400°C et 450°C. De plus, aux températures de croissance sur aluminium, le toluène se décompose très peu et il n'est donc pas une source de carbone favorable à la croissance de NTC. Il est nécessaire d'introduire une source carbonée qui se décompose à plus basse température et il est possible d'utiliser l'acétylène.

Dans les deux exemples suivants, nous présentons une synthèse réalisée sur un substrat d'alliage d'aluminium. La synthèse N°1 est réalisée en statique pour une durée de synthèse 60min. Un tapis de nanotubes de carbone d'environ 120 micromètres (µm) est obtenu. La synthèse N°2, qui est réalisée en Roll to Roll, permet d'obtenir une hauteur de 20µm. Dans ce cas, le temps de résidence du substrat dans la chambre de réaction a été moins long du fait du déplacement du substrat.

Une analyse au microscope électronique à transmission de NTC obtenus dans les deux types de synthèse, permet d'estimer le diamètre moyen externe entre 8 et 9 nanomètres (nm).

**Tableau 1 : Paramètres de synthèses de VACNT sur substrat d'aluminium**

| | | Synthèse N°1 | Synthèse N°2 |
|---|---|---|---|
| Type d'aluminium | | Aluminium 3003 avec 1% de manganèse et une épaisseur de 40µm | |
| Vitesse de défilement du film (m/h) | | 0 | 1 |
| Température de sole (°C) | | 580 | 580 |
| Concentration du mélange toluène/ferrocène | | 10% en poids de Ferrocène | |
| Module d'injection 5 | Débit d'argon (L/min) | 1.200 | 1.200 |
| | Débit d'Hydrogène (L/min) | 0.900 | 0.900 |
| | Débit d'acétylène (L/min) | 0.900 | 0.900 |
| | Masse de liquide injectée (g/h) | 48 | 48 |
| Module d'injection 5' | Débit d'argon (L/min) | 0.250 | 0.250 |
| | Débit d'Hydrogène (L/min) | 0.188 | 0.188 |
| | Débit d'acétylène (L/min) | 0.188 | 0.188 |
| | Masse de liquide injectée (g/h) | 10 | 10 |
| Module d'injection 5" | Débit d'argon (L/min) | 0.250 | 0.250 |
| | Débit d'Hydrogène (L/min) | 0.188 | 0.188 |
| | Débit d'acétylène (L/min) | 0.188 | 0.188 |
| | Masse de liquide injectée (g/h) | 10 | 10 |
| Masse de liquide injectée totale (g) | | 78 | |
| Gaz rideau 1 et 2 (L/min) | | 40 | |
| Gaz inertage (L/min) | | 200 | |
| Pression relative dans l'enceinte principale (mbar) | | -0,51 | -0,50 |
| Pression relative dans la chambre réactionnelle (mbar) | | -0,57 | -0,53 |
| Taux d'oxygène dans l'enceinte principale (ppm) | | 300 | 400 |
| Taux d'oxygène dans la chambre réactionnelle (ppm) | | 11 | 10 |

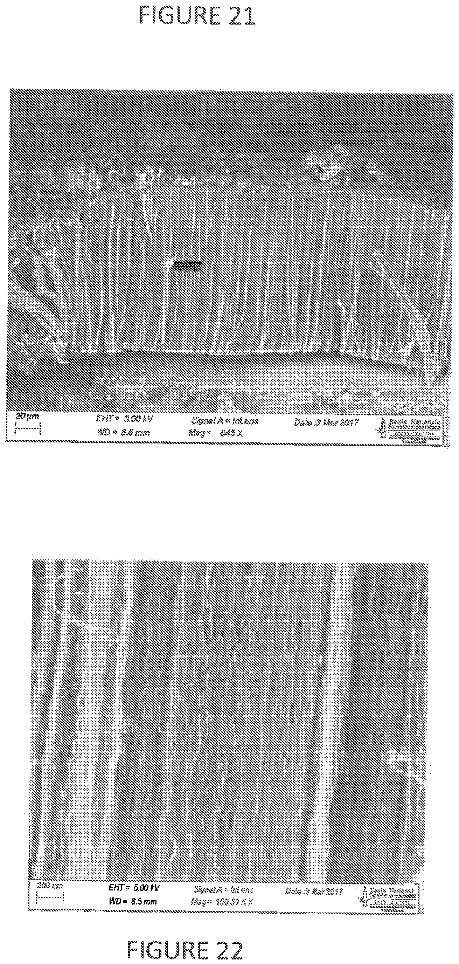

Les figures 21 et 22 annexées montrent, respectivement à faible et à fort grossissement, un exemple de croissance de VACNT (nanotubes de carbone verticalement alignés) sur l'alliage d'aluminium AlMn1 ci-dessus, pour la condition de synthèse 1 telle que décrite ci-dessus.

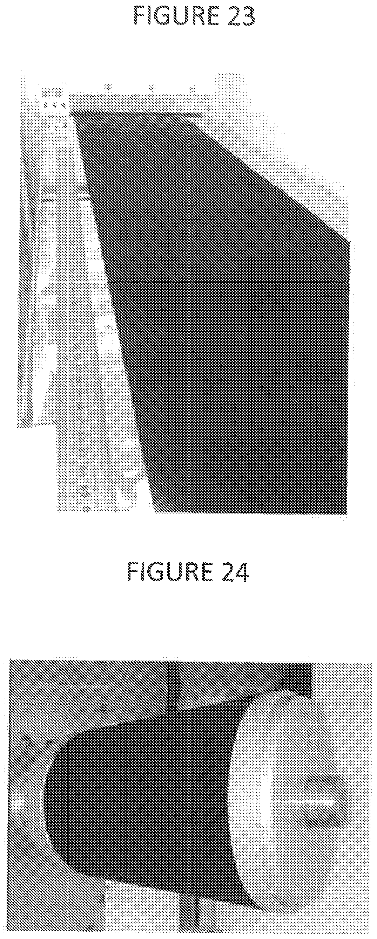

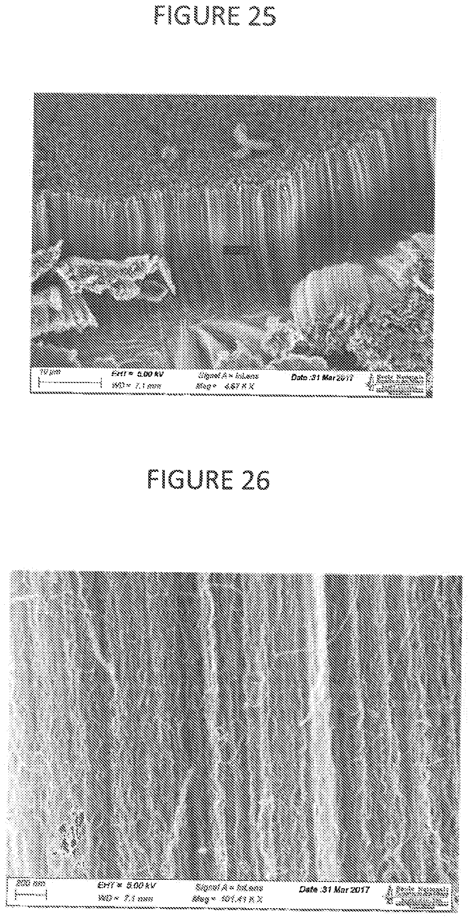

Les figures 23 à 26 annexées illustrent différents aspects de la synthèse 2, telle que décrite ci-dessus. La figure 23 montre tout d'abord des nanotubes de carbone sur un substrat aluminium, en mode roll to roll, en sortie de l'installation où s'est déroulée cette synthèse. Par ailleurs, la figure 24 montre ce même substrat d'aluminium et les VACNT enroulés sur un rouleau de sortie. Les figures 25 et 26 annexées, analogues à celles 21 et 22 mentionnées ci-dessus, montrent respectivement à faible et fort grossissement des images de cette synthèse 2 sur cet alliage d'aluminium AlMn1 avec ces VACNT.

## Revendications

1. Installation pour la fabrication d'un matériau composite comprenant des nanotubes de carbone, cette installation comportant
- au moins une chambre de traitement, ou chambre réactionnelle (4), comprenant des moyens d'injection (5, 5', 5") d'un mélange gazeux actif dans le volume intérieur de cette chambre, ce mélange gazeux étant destiné à la croissance des nanotubes de carbone,
- des moyens de transport d'un substrat destiné à former ledit matériau composite, sous forme de feuille ou de bande, dans la chambre,
**caractérisée en ce que**
les moyens d'injection sont aptes à transporter le mélange actif selon une première direction dans ledit volume intérieur,
et **en ce que** l'installation comprend en outre des moyens de mise en circulation (7, 7') du mélange gazeux, aptes à transporter le mélange actif dans ledit volume intérieur selon une deuxième direction, différente de ladite première direction,
les moyens de mise en circulation pouvant adopter une première configuration d'injection du mélange gazeux actif dans le volume intérieur de cette chambre, ainsi qu'une deuxième configuration d'extraction du mélange gazeux actif hors dudit volume intérieur, sachant que de préférence :
ladite première direction est sensiblement perpendiculaire à la direction de défilement du substrat dans la chambre, alors que ladite deuxième direction est sensiblement parallèle à la direction de défilement du substrat.

2. Installation selon la revendication précédente, **caractérisée en ce que** les moyens de mise en circulation comprennent au moins deux dispositifs de mise en circulation, respectivement amont (7) et aval (7'), prévus de part et d'autre des moyens d'injection (5, 5', 5"), en référence au sens de défilement du substrat, sachant que de préférence chaque dispositif de mise en circulation (7, 7') est équipé de moyens de connexion (C7, C7') propres à être raccordés sélectivement, soit à une source de mélange gazeux (100), soit à une source de dépression (200).

3. Installation selon l'une quelconque des revendications précédentes, **caractérisée en ce que** les moyens d'injection comprennent au moins un module d'injection (5, 5', 5"), chaque module d'injection comprenant une plaque perforée (50) de distribution de mélange gazeux, ainsi qu'un capot (60) délimitant un volume (64) d'homogénéisation dudit mélange.

4. Installation selon la revendication précédente, **caractérisée en ce que** chaque module d'injection (5, 5', 5") comprend un organe de répartition (65) en forme de parasol inversé, propre à répartir le gaz dans le volume intérieur dudit module.

5. Installation selon l'une quelconque des revendications précédentes, **caractérisée en ce qu'**elle comprend en outre au moins deux unités (8, 8') de fourniture d'un gaz barrière, prévues de part et d'autre des moyens d'injection, en référence à la direction de défilement du substrat.

6. Installation selon l'une quelconque des revendications précédentes, **caractérisée en ce que** les moyens d'injection (5, 5', 5"), les moyens de mise en circulation (7, 7') et, éventuellement, les unités de fourniture d'un gaz barrière (8, 8') sont logés dans une enceinte (1), ladite enceinte comprenant en outre des moyens de chauffage (26).

7. Installation selon l'une quelconque des revendications précédentes, **caractérisée en ce qu'**elle comprend en outre au moins deux ensembles (9, 9') d'aspiration de gaz, prévus de part et d'autre des moyens d'injection, en référence à la direction de défilement du substrat.

8. Installation selon la revendication précédente, **caractérisée en ce que** ledit ensemble d'aspiration de gaz (9) comprend deux conduites d'extraction (92), dans lesquelles le gaz s'écoule transversalement par rapport à la direction de défilement (DS) du substrat, et cet ensemble d'aspiration est équipé de deux déflecteurs (94) s'étendant sensiblement parallèlement à la direction de défilement du substrat, chaque déflecteur étant placé en regard d'au moins une partie du débouché d'une conduite d'extraction respective.

9. Installation selon l'une quelconque des revendications précédentes, **caractérisée en ce qu'**elle comprend en outre un organe complémentaire (95) d'injection de gaz, intercalé entre l'ensemble d'aspiration de gaz amont (9) et l'entrée (E1) de la chambre réactionnelle, sachant que de préférence ledit organe complémentaire (95) d'injection de gaz comprend deux séries d'orifices d'injection (97, 98), dans lesquelles le gaz s'écoule transversalement par rapport à la direction de défilement (DS) du substrat, et cet organe complémentaire d'injection est équipé de deux déflecteurs (99), s'étendant sensiblement parallèlement à la direction de défilement du substrat, chaque déflecteur étant placé en regard d'au moins une partie du débouché d'une série respective d'orifices d'injection.

10. Procédé de mise en œuvre de l'installation selon l'une quelconque des revendications précédentes, dans lequel :
- on active les moyens d'injection (5, 5', 5"), de manière à admettre du mélange gazeux actif dans le volume intérieur de la chambre (4), selon la première direction ;
- on active les moyens de mise en circulation (7, 7'), de manière à transporter ce mélange gazeux actif le long de cette chambre, selon la deuxième direction ;
- on fait défiler le substrat dans ladite chambre, de manière à former des nanotubes de carbone à la surface de ce substrat.

11. Procédé selon la revendication 10, dans lequel on transporte le mélange gazeux actif selon une direction parallèle à la direction de défilement du substrat, on admet une première fraction de mélange gazeux actif par les moyens d'injection et on admet une deuxième fraction du mélange gazeux actif par les moyens de mise en circulation.

12. Procédé selon la revendication 11, dans lequel on admet la deuxième fraction du mélange gazeux actif en amont de la chambre réactionnelle, de sorte que le mélange gazeux actif est transporté dans le même sens que le sens de défilement du substrat.

13. Procédé selon la revendication 11, dans lequel on admet la deuxième fraction du mélange gazeux actif en aval de la chambre réactionnelle, de sorte que le mélange gazeux actif est transporté dans le sens opposé au sens de défilement du substrat.

14. Procédé selon la revendication 10, dans lequel on admet la totalité du mélange gazeux actif par les moyens d'injection et on active les deux dispositifs de mise en circulation, respectivement amont et aval, de sorte qu'une partie du mélange gazeux actif est transportée dans le même sens que le sens de défilement du substrat, alors qu'une autre partie du mélange gazeux est transportée dans le sens opposé au sens de défilement du substrat.

15. Procédé selon l'une quelconque des revendications 10 à 14, pour la mise en œuvre de l'installation selon l'une quelconque des revendications 6 ou 7, procédé dans lequel on place la chambre réactionnelle (4) en sous pression par rapport au reste de l'enceinte (1), la différence entre la pression (P1) du reste de l'enceinte (1) et la pression (P4) de la chambre réactionnelle étant comprise entre 1 et 20 Pa, notamment entre 2 et 10 Pa, en particulier voisine de 5 Pa.

## Patentansprüche

1. Anlage zur Herstellung eines Verbundmaterials Kohlenstoffnanoröhrchen umfassend, wobei diese Anlage Folgendes beinhaltet
- mindestens eine Behandlungskammer, oder Reaktionskammer (4), welche Injektionsmittel (5, 5', 5") eines aktiven Gasgemisches in das Innenvolumen dieser Kammer umfasst, wobei dieses Gasgemisch für das Wachstum der Kohlenstoffnanoröhrchen bestimmt ist,
- Transportmittel eines Substrats, welches dazu bestimmt ist, das Verbundmaterial zu bilden, in Form eines Blattes oder Streifens, in die Kammer,
**dadurch gekennzeichnet, dass**
die Injektionsmittel imstande sind, das aktive Gemisch in einer ersten Richtung in das Innenvolumen zu transportieren,
und dadurch, dass die Anlage weiter Mittel zum in Umlauf bringen (7, 7') des Gasgemisches beinhaltet, die imstande sind, das aktive Gemisch in einer zweiten Richtung in das Innenvolumen zu transportieren, die sich von der ersten Richtung unterscheidet,
wobei die Mittel zum in Umlauf bringen eine erste Injektionskonfiguration des aktiven Gasgemisches in das Innenvolumen dieser Kammer, sowie eine zweite Austragskonfiguration des aktiven Gasgemisches aus dem Innenvolumen annehmen können, wobei festzuhalten ist, dass vorzugsweise:
die erste Richtung im Wesentlichen senkrecht zu der Vorlaufrichtung des Substrats in die Kammer ist, während die zweite Richtung im Wesentlichen parallel zu der Vorlaufrichtung des Substrats liegt.

2. Anlage nach dem vorstehenden Anspruch, **dadurch gekennzeichnet, dass** die Mittel zum in Umlauf bringen mindestens zwei Vorrichtungen zum in Umlauf bringen, jeweils stromaufwärts (7) und stromabwärts (7') umfassen, die auf jeder Seite der Injektionsmittel (5, 5', 5"), in Bezug auf die Vorlaufrichtung des Substrats vorgesehen sind, wobei festzuhalten ist, dass vorzugsweise jede Vorrichtung zum in Umlauf bringen (7, 7') mit Verbindungsmitteln (C7, C7') ausgestattet ist, die geeignet sind, um selektiv entweder an eine Gasgemisch-Quelle (100), oder an eine Unterdruck-Quelle (200) angeschlossen zu werden.

3. Anlage nach einem der vorstehenden Ansprüche, **dadurch gekennzeichnet, dass** die Injektionsmittel mindestens ein Injektionsmodul (5, 5', 5") umfassen, wobei jedes Injektionsmodul eine Lochplatte (50) zum Verteilen eines Gasgemisches, sowie eine Abdeckung (60) umfasst, die ein Volumen (64) zur Homogenisierung des Gemisches begrenzt.

4. Anlage nach dem vorstehenden Anspruch, **dadurch gekennzeichnet, dass** jedes Injektionsmodul (5, 5', 5") ein Verteilungsorgan (65) in der Form eines umgekehrten Regenschirms umfasst, welches zum Verteilen des Gases im Innenvolumen des Moduls geeignet ist.

5. Anlage nach einem der vorstehenden Ansprüche, **dadurch gekennzeichnet, dass** sie weiter mindestens zwei Einheiten (8, 8') zum Bereitstellen eines Sperrgases umfasst, welche auf jeder Seite der Injektionsmittel, in Bezug auf die Vorlaufrichtung des Substrats vorgesehen sind.

6. Anlage nach einem der vorstehenden Ansprüche, **dadurch gekennzeichnet, dass** die Injektionsmittel (5, 5', 5"), die Mittel zum in Umlauf bringen (7, 7') und eventuell die Einheiten zum Bereitstellen eines Sperrgases (8, 8') in einem Einschluss (1) aufgenommen sind, wobei der Einschluss weiter Mittel zum Erwärmen (26) umfasst.

7. Anlage nach einem der vorstehenden Ansprüche, **dadurch gekennzeichnet, dass** sie weiter mindestens zwei Gasabsauganordnungen (9, 9') umfasst, die auf jeder Seite der Injektionsmittel in Bezug auf die Vorlaufrichtung des Substrats vorgesehen sind.

8. Anlage nach dem vorstehenden Anspruch, **dadurch gekennzeichnet, dass** die Gasabsauganordnung (9) zwei Austragsleitungen (92) umfasst, in denen das Gas in Bezug auf die Vorlaufrichtung (DS) des Substrats querlaufend strömt, und diese Absauganordnung mit zwei Abweisern (94) ausgestattet ist, die sich im Wesentlichen parallel zu der Vorlaufrichtung des Substrats erstrecken, wobei jeder Abweiser gegenüber mindestens einem Teil der Mündung einer jeweiligen Austragsleitung platziert ist.

9. Anlage nach einem der vorstehenden Ansprüche, **dadurch gekennzeichnet, dass** sie weiter ein ergänzendes Gasinjektionsorgan (95) umfasst, das zwischen der stromaufwärtigen Gasabsauganordnung (9) und dem Eingang (E1) der Reaktionskammer eingesetzt ist,
wobei festzuhalten ist, dass das ergänzende Gasinjektionsorgan (95) vorzugsweise zwei Reihen von Injektionsöffnungen (97, 98) umfasst, in denen das Gas in Bezug auf die Vorlaufrichtung (DS) des Substrats querlaufend strömt, und dieses ergänzende Injektionsorgan mit zwei Abweisern (99) ausgestattet ist, die sich im Wesentlichen parallel zu der Vorlaufrichtung des Substrats erstrecken, wobei jeder Abweiser gegenüber mindestens einem Teil der Mündung einer jeweiligen Reihe von Injektionsöffnungen platziert ist.

10. Verfahren zur Durchführung der Anlage nach einem der vorstehenden Ansprüche, wobei:
- die Injektionsmittel (5, 5', 5") aktiviert werden, um aktives Gasgemisch in das Innenvolumen der Kammer (4) in der ersten Richtung einzulassen;
- Mittel zum in Umlauf bringen (7, 7') aktiviert werden, um dieses aktive Gasgemisch entlang dieser Kammer in einer zweiten Richtung zu transportieren;
- das Substrat in der Kammer vorlaufen gelassen wird, um Kohlenstoffnanoröhrchen an der Oberfläche dieses Substrats zu bilden.

11. Verfahren nach Anspruch 10, wobei das aktive Gasgemisch in einer Richtung parallel zur Vorlaufrichtung des Substrats transportiert wird, eine erste Fraktion eines aktiven Gasgemisches durch die Injektionsmittel eingelassen wird und eine zweite Fraktion des aktiven Gasgemisches durch die Mittel zum in Umlauf bringen eingelassen wird.

12. Verfahren nach Anspruch 11, wobei die zweite Fraktion des aktiven Gasgemisches stromaufwärts der Reaktionskammer eingelassen wird, sodass das aktive Gasgemisch in derselben Richtung wie der Vorlaufrichtung des Substrats transportiert wird.

13. Verfahren nach Anspruch 11, wobei die zweite Fraktion des aktiven Gasgemisches stromabwärts der Reaktionskammer eingelassen wird, sodass das aktive Gasgemisch in der entgegengesetzten Richtung zur Vorlaufrichtung des Substrats transportiert wird.

14. Verfahren nach Anspruch 10, wobei das gesamte aktive Gasgemisch durch die Injektionsmittel eingelassen wird, und die beiden, jeweils stromaufwärtigen und stromabwärtigen Mittel zum in Umlauf bringen aktiviert werden, sodass ein Teil des aktiven Gasgemisches in derselben Richtung wie der Vorlaufrichtung des Substrats transportiert wird, während ein anderer Teil des Gasgemisches in der entgegengesetzten Richtung zur Vorlaufrichtung des Substrats transportiert wird.

15. Verfahren nach einem der Ansprüche 10 bis 14, zur Durchführung der Anlage nach einem der Ansprüche 6 oder 7, Verfahren, bei dem die Reaktionskammer (4) in Bezug auf den Rest des Einschlusses (1) in Unterdruck platziert wird, wobei die Differenz zwischen dem Druck (P1) des Rests des Einschlusses (1) und dem Druck (P4) der Reaktionskammer zwischen 1 und 20 Pa, insbesondere zwischen 2 und 10 Pa enthalten ist, insbesondere nahe 5 Pa gelegen ist.

## Claims

1. Facility for producing a composite material comprising carbon nanotubes, said facility including
- at least one treatment chamber, or reaction chamber (4), comprising means (5, 5', 5") for injecting an active gas mixture into the interior volume of said chamber, this gas mixture being intended for the growth of carbon nanotubes,
- means for transporting a substrate intended to form said composite material, in the form of a sheet or strip, into the chamber,
**characterised in that**
the injection means are capable of transporting the active mixture in a first direction into said interior volume,
and **in that** the facility also includes means (7, 7') for circulating the gas mixture, capable of transporting the active mixture in said interior volume in a second direction, different from said first direction,
the circulation means being capable of adopting a first configuration of injection of the active gas mixture into the interior volume of this chamber, as well as a second configuration of extraction of the active gas mixture from said interior volume, with the understanding that preferably:
said first direction is substantially perpendicular to the direction of movement of the substrate in the chamber, while said second direction is substantially parallel to the direction of movement of the substrate.

2. Facility according to the previous claim, **characterised in that** the circulation means comprise at least two circulation devices, respectively upstream (7) and downstream (7'), provided on either side of the injection means (5, 5', 5"), with reference to the direction of movement of the substrate, with the understanding that preferably each circulation device (7, 7') is equipped with connection means (C7, C7') suitable for being selectively connected, either to a gas mixture source (100), or to a vacuum source (200).

3. Facility according to any one of the previous claims, **characterised in that** the injection means comprise at least one injection module (5, 5', 5"), each injection module comprising a perforated plate (50) for distribution of a gas mixture, as well as a cover (60) defining a volume (64) for homogenisation of said mixture.

4. Facility according to the previous claim, **characterised in that** each injection module (5, 5', 5") comprises a distribution member (65) in the form of an inverted umbrella, suitable for distributing the gas in the interior volume of said module.

5. Facility according to any one of the previous claims, **characterised in that** it also comprises at least two units (8, 8') for supplying a barrier gas, provided on either side of the injection means, with reference to the direction of movement of the substrate.

6. Facility according to any one of the previous claims, **characterised in that** the injection means (5, 5', 5"), the circulation means (7, 7') and, optionally, the barrier gas supply units (8, 8') are housed in an enclosure (1), said enclosure also comprising heating means (26).

7. Facility according to any one of the previous claims, **characterised in that** it also comprises at least two gas suction assemblies (9, 9'), provided on either side of the injection means, with reference to the direction of movement of the substrate.

8. Facility according to the previous claim, **characterised in that** said gas suction assembly (9) comprises two extraction ducts (92), in which the gas flows transversely with respect to the direction of movement (DS) of the substrate, and this suction assembly is equipped with two deflectors (94), extending substantially parallel to the direction of movement of the substrate, each deflector being placed opposite at least a portion of the outlet of a respective extraction duct.

9. Facility according to any one of the previous claims, **characterised in that** it also comprises a complementary gas injection member (95), inserted between the upstream gas suction assembly (9) and the inlet (E1) of the reaction chamber, with the understanding that said complementary gas injection member (95) preferably comprises two series of injection orifices (97, 98), in which the gas flows transversely with respect to the direction of movement (DS) of the substrate, and this complementary injection member is equipped with two deflectors (99), extending substantially parallel to the direction of movement of the substrate, each deflector being placed opposite at least a portion of the outlet of a respective series of injection orifices.

10. Method for implementing the facility according to any one of the previous claims, in which:
- the injection means (5, 5', 5") are activated so as to admit active gas mixture into the interior volume of the chamber (4), in the first direction;
- the circulation means (7, 7') are activated so as to transport this active gas mixture along this chamber, in the second direction;
- the substrate is moved in said chamber, so as to form carbon nanotubes at the surface of said substrate.

11. Method according to claim 10, in which the active gas mixture is transported in a direction parallel to the direction of movement of the substrate, a first fraction of the active gas mixture is admitted by the injection means and a second fraction of the active gas mixture is admitted by the circulation means.

12. Method according to claim 11, in which the second fraction of the active gas mixture is admitted upstream of the reaction chamber, so that the active gas mixture is transported in the same direction as the direction of movement of the substrate.

13. Method according to claim 11, in which the second fraction of the active gas mixture is admitted downstream of the reaction chamber, so that the active gas mixture is transported in the direction opposite to the direction of movement of the substrate.

14. Method according to claim 10, in which the entire active gas mixture is admitted by the injection means, and the two circulation devices, respectively upstream and downstream, are activated so that a portion of the active gas mixture is transported in the same direction as the direction of movement of the substrate, while another portion of the gas mixture is transported in the direction opposite to the direction of movement of the substrate.

15. Method according to any one of claims 10 to 14, for implementing the facility according to either one of claims 6 or 7, in which method the reaction chamber (4) is placed under reduced pressure with respect to the rest of the enclosure (1), the difference between the pressure (P1) of the rest of the enclosure (1) and the pressure (P4) of the reaction chamber being between 1 and 20 Pa, in particular between 2 and 10 Pa, and in particular around 5 Pa.
